# EUROPÄISCHE PATENTSCHRIFT

(11) **EP 3 458 904 B1**
(45) Veröffentlichungstag und Bekanntmachung des Hinweises auf die Patenterteilung: **09.10.2019**
(21) Anmeldenummer: 17740757.4
(22) Anmeldetag: 19.07.2017
(51) Int. Cl.: G02C 7/02, G02C 7/06, B29D 11/00, B33Y 10/00, G02B 3/10

(54) **BRILLENGLAS UND VERFAHREN ZU DESSEN HERSTELLUNG**
SPECTACLE GLASS AND METHOD FOR ITS PRODUCTION
VERRE DE LUNETTE ET SON PROCEDE DE FABRICATION

(30) Priorität: 19.07.2016 EP 16180167
(43) Veröffentlichungstag der Anmeldung: 27.03.2019
(60) Teilanmeldung: 18214846.0
(73) Patentinhaber: Carl Zeiss Vision International GmbH, 73430 Aalen (DE)
(72) Erfinder: MAPPES, Timo, 76135 Karlsruhe (DE); HORNAUER, Matthias, 73466 Lauchheim-Hülen (DE); MICHELS, Georg, 73430 Aalen (DE); GLÖGE, Thomas, 73614 Schorndorf (DE)
(74) Vertreter: Carl Zeiss AG - Patentabteilung
(86) Internationale Anmeldenummer: PCT/EP2017/068241
(87) Internationale Veröffentlichungsnummer: WO 2018/015442

(56) Entgegenhaltungen:
- EP-A1- 2 878 989
- WO-A2-2009/100257
- JP-A- H05 313 107
- JP-A- 2003 029 216
- JP-A- 2004 157 487
- US-A1- 2016 161 761
- H.-J Trost ET AL: "USING DROP-ON-DEMAND TECHNOLOGY FOR MANUFACTURING GRIN LENSES", , 15. November 2001 (2001-11-15), XP055122645, Gefunden im Internet: URL:http://www.microfab.com/archive/about/ papers/ASPE_01.pdf [gefunden am 2014-06-11]

## Beschreibung

Die Erfindung betrifft Brillengläser nach dem Oberbegriff des Patentanspruchs 3 sowie ein Verfahren zum Herstellen eines Brillenglases nach dem Oberbegriff des Patentanspruchs 1.

Brillengläser sind aus dem Stand der Technik in vielen Variationen bekannt. Es gibt Brillengläser ohne nominelle dioptrische Wirkung und Korrektions-Brillengläser, also Brillengläser mit dioptrischer Wirkung. Dioptrische Wirkung ist der Sammelbegriff für die fokussierende und die prismatische Wirkung eines Brillenglases.

Bei Korrektions-Brillengläsern unterscheidet man zwischen Einstärken-Brillengläsern und Multifokal-Brillengläsern. Ein Einstärken-Brillenglas ist ein Brillenglas, bei dem von der Konstruktion her nur eine dioptrische Wirkung vorhanden ist. Ein Mehrstärken-Brillenglas ist ein Brillenglas, bei dem von der Konstruktion her zwei oder mehr sichtbar verschiedene Teile mit unterschiedlichen fokussierenden Wirkungen vorhanden sind. Von Bedeutung sind insbesondere Zweistärken- oder Bifokal-Brillengläser, nämlich Mehrstärken-Brillengläser mit zwei Teilen, üblicherweise für das Sehen in die Ferne und die Nähe, sowie Gleitsicht-Brillengläser, nämlich Brillengläser mit mindestens einer Gleitsichtfläche und einer zunehmenden (positiven) Wirkung, wenn der Brillenträger nach unten blickt. Selten sind degressive Brillengläser, also solche mit mindestens einer Gleitsichtfläche und einer abnehmenden Wirkung (d. h. einer Abschwächung der Wirkung), wenn der Brillenträger nach unten blickt.

Welche Form das Brillenglas erhalten muss, um die gewünschte optische Korrektur zu erhalten, wird maßgeblich von dessen Werkstoff bestimmt. Wichtigster Parameter ist hierbei der Brechungsindex des Werkstoffs. Während in der Vergangenheit Brillengläser vorwiegend aus mineralischen Gläsern, insbesondere Krongläsern (Abbe-Zahl > 55) und Flintgläsern (Abbe-Zahl < 50) hergestellt wurden, sind mittlerweile Brillengläser aus einer Vielzahl an organischen Materialien erhältlich. Derartige Grundmaterialien für organische Brillengläser werden u.a. unter den Handelsbezeichnungen CR 39, MR 8, MR 7, CR 330 sowie MR 174 angeboten. Eine Auswahl solcher Grundmaterialien findet sich auch in der Veröffentlichungsschrift EP 2692941 A1. Laufend werden andere Werkstoffe auf deren Eignung für organische Brillengläser getestet und entwickelt. Die folgende Tabelle 1 veranschaulicht Kenngrößen sowie Bezugsgrößen einer Auswahl an bekannten Grundmaterialien.

**Tabelle 1: Grundmaterialien für die Herstellung von Brillengläsern**

| Handelsname | Grundmaterial | Mittlerer Brechungsindex nₑ | Abbe-Zahl vₑ |
|---|---|---|---|
| CR 39 | Polyallyldiglycolcarbonat | | |
| CR 330 | | | |
| CR 607 | | | |
| CR 630 | | 1.500 | 56 |
| Trivex | Polyharnstoff/Polyurethan | 1.530 | 45 |
| PC | Polycarbonat | 1.590 | 29 |
| MR 6 | Polythiourethan | 1.598 | |
| MR 8 | Polythiourethan | 1.598 | 41 |
| MR 7 | Polythiourethan | 1.664 | 32 |
| MR 10 | Polythiourethan | 1.666 | 32 |
| MR 174 | Polyepisulfid | 1.738 | 32 |
| | Mineral 1.5 | 1.525 | 58 |
| | Mineral 1.6 | 1.604 | 44 |

Derzeit werden eine große Anzahl an organischen Brillenglas-Halbfertigfabrikaten oder Brillenglas-Fertigfabrikaten mit sphärischen, rotationssymmetrisch asphärischen oder progressiven Vorderflächen in Massenfertigung in Urformen mit Vorder- und Rückflächenformschalen, die mittels eines Dichtrings einen Hohlraum bildend voneinander beabstandet sind, abgegossen, wie dies z.B. in den Dokumenten DE 30 07 572 C2, US 6,103,148 A oder JP 2008 191186 A beschrieben ist. Dies gilt für Grundmaterialien mit den Handelsbezeichnungen MR 7, MR 8, MR 10 sowie CR 39, CR 607, CR 630 und weitere. Bei den Grundmaterialien mit den Handelsbezeichnungen MR 7, MR 8 und MR 10 handelt es ich um Polythiourethane, die von der Firma Mitsui Chemicals vertrieben werden. Die Abkürzung "MR" steht dabei für Mitsui Resin. CR 39 oder Columbia Resin 39 ist die von der Firma Pittsburgh Plate Glass Industries (PPG Industries) gewählte Marke, unter der der Werkstoff Polydiethylenglycolbisallylcarbonat bzw. Polyallyldiglycolcarbonat (Abkürzung: PADC) vertrieben wird. Hierbei handelt es sich um einen duroplastischen Polymerwerkstoff. CR 607 und CR 630 stammen ebenfalls von der Firma PPG.

Halbfertigfabrikate oder Fertigfabrikate für Brillengläser aus Polycarbonat werden im Allgemeinen in Metallformen mittels Spritzgusstechnik erzeugt. Dieses Herstellverfahren ist z.B. in der EP 0955147 A1 beschrieben. Unter Halbfabrikat versteht man einen Brillenglasrohling mit einer fertig bearbeiteten Fläche, deren Form in weiteren Produktionsschritten nicht mehr verändert wird. Die gegenüberliegende Fläche eines Halbfabrikats erhält ihre finale Form in der Regel mittels eines materialabtragenden Verfahrens. Ein Fertigfabrikat ist ein Brillenglasrohling, bei dem beide Flächen bereits ihre endgültige Form erhalten haben.

Mineralische Brillengläser werden regelmäßig durch maschinelle mechanisch abrasive Bearbeitung eines Rohlings erzeugt.

Die vorstehend beschriebenen Halbfertig- oder Fertigfabrikate werden häufig einem oder mehreren Veredelungsprozessen unterzogen. Insbesondere werden ein- oder beidseitig Funktionsschichten appliziert. Derartige Funktionsschichten sind Schichten, die die Brillengläser mit vorbestimmten und für den Brillenträger vorteilhaften Eigenschaften ausstatten, die die Brillengläser allein aufgrund der Eigenschaften des Grund- oder Trägermaterials, auf das die Funktionsschichten ggf. appliziert werden, und der Formgebung nicht hätten. Derartige vorteilhafte Eigenschaften sind neben optischen Eigenschaften wie z.B. Entspiegelung, Verspiegelung, Lichtpolarisierung, Färbung, Selbsttönung usw. auch mechanische Eigenschaften wie Härtung, Verminderung des Anhaftens von Schmutz oder des Beschlagens usw. und/oder elektrische Eigenschaften wie Abschirmung von elektromagnetischer Strahlung, Leitung von elektrischem Strom usw. und/oder andere physikalische oder chemische Eigenschaften. Beispiele für Funktionsbeschichtungen entnimmt man z.B. den Dokumenten WO 10/109154 A1, WO 01/55752 A1 und DE 10 2008 041 869 A1.

Auftragsspezifische Rezeptbrillengläser, d.h. insbesondere individualisierte Einstärken- und Mehrstärkengläser, deren optische Eigenschaften wenigstens teilweise nicht vorauswählbar standardisiert sind, sondern in Bezug auf deren Maß und/oder deren Anordnung auf dem Brillenglas auf den Benutzer angepasst individuell berechnet und gefertigt werden, und im Besonderen Gleitsicht- bzw. Progressivgläser werden durch mechanische, insbesondere deformierende und/oder abrasive, Verfahren in ihre finale Form gebracht. Hierbei können die Außenformen rund, oval oder willkürlich, sogenannte Freiformen beschreibend, ausgebildet sein.

Hochwertige Brillengläser werden heutzutage mit individuell angepasster dioptrischer Wirkung in einer dafür ausgelegten Rezeptfertigungsstätte, einem sogenannten Rx-Lab (Rx ist das Kürzel für Rezept), mittels subtraktiver Fertigungsmethoden aus Halbfabrikaten (abgekürzt HF) hergestellt. Das fertige Produkt wird durch zwei optische Oberflächen definiert, die je nach Stärke bzw. dioptrischer Wirkung, Material und Regulatorik unterschiedliche Abstände zueinander haben. Die beiden optischen Oberflächen sind als Folge des im Allgemeinen verwendeten Freiform-Fertigungsverfahrens stetig. Die Ausnahmen von dieser Regel, die eingelassenen Nahbereichsflächen bei Bifokal- und Trifokalgläsern, müssen bei Kunststoffgläsern bereits im Abgießprozess auf der Vorderseite eingebracht werden. Es gibt auch entsprechende Brillengläser mit rückseitig abstehend abgeformten Nahbereichsflächen.

Bei heutigen Brillengläsern mit mehreren Stärken bzw. dioptrischen Wirkungen, nämlich bei Bifokalgläsern, Trifokalgläsern und Multifokalgläsern, insbesondere Gleitsichtgläsern sind der Nah- und Fernbereich räumlich getrennt. Dies stört insbesondere immer dann, wenn der Brillenträger im Nahbereich, aber hoch vor dem Kopf bzw. im Fernbereich durch den unteren Teil der Brille sehen möchte.

Der derzeitige Markt für Brillenfassungen ist in Hinsicht auf die Designfreiheit sehr davon abhängig, welche Formen und Größen an Brillengläsern von deren Produzenten geliefert werden können. Entscheidend sind hier vor allem der Durchmesser und die Dicke der Halbfabrikate, die festlegen, ob ein Brillenglas noch gefertigt werden kann, weil es in das Halbfabrikat hineinpasst oder eben nicht. Hier können die Begrenzungen der herkömmlichen Massenfertigung deutlich ausgeweitet werden, wenn das Abgießen der Halbfabrikate in vorgegebenen Formschalen aufgegeben wird.

Bei den derzeitig in der Massenfertigung hergestellten Brillengläsern ist der Brechungsindex unabhängig vom Ort einheitlich und konstant, so dass bei starken Korrektionen die Dicke des Brillenglases zum Rand hin (bei Myopen bzw. Kurzsichtigen) oder zur Mitte hin (bei Hyperopen bzw. Weitsichtigen) deutlich zunimmt. Dies ist insbesondere im ersten Fall kosmetisch unattraktiv, weil die große Randdicke auffällig ist.

Die nachfolgend angegebenen inhärenten Eigenschaften von massengefertigten Brillengläsern, die selbst bei hochwertigen Produkten vorhanden sind, werden als störend empfunden:
1. die makroskopische räumliche Trennung von Nah- und Fernbereich
2. die beim gleitenden Übergang vom Fern- in den Nahbereich bei Gleitsichtgläsern nach dem Satz von Minkwitz unvermeidbar auftretenden astigmatischen Verzerrungen zum Rand hin
3. die nur mit erheblichem Aufwand realisierbaren unstetigen und/oder unstetig differenzierbaren optischen Oberflächen
4. die kosmetisch unattraktive, da sichtbare Kante zwischen Grundglas und Segment bei nichtprogressiven Multifokalgläsern, wie z.B. bei Bifokal- oder Trifokalgläsern
5. die unästhetische, da sichtbare große Randdicke bei Brillengläsern mit starker dioptrischer Wirkung; insbesondere hohe prismatische Werte führen bei myopen Menschen zu einem dicken Rand des Brillenglases
6. die Einschränkung der Herstellbarkeit von Korrektionsbrillen im Falle von als ästhetisch empfundenen Formvorgaben an die Brillenglasvorderfläche und/oder die Brillenfassung; heutige Brillengläser sind durch die Herstellungsart und die Form der Fassungen ganz erheblich eingeschränkt in Hinsicht auf die äußere Form, daraus folgt eine entsprechend geringe Designfreiheit. Produkte wie Nike Vaporwing Elite sind im Rahmen der derzeit bestehenden Restriktionen praktisch nicht mit optischer Stärke sondern nur als 0 dpt Sonnenbrillen herstellbar.

Aus dem Stand der Technik sind unterschiedliche Ansätze bekannt, Brillengläser im Hinblick auf die oben als störend empfundenen Eigenschaften zu verbessern. Insbesondere ist in diesem Zusammenhang bekannt, dass insbesondere sogenannte digitale Fabrikatoren Fertigungsmöglichkeiten für nahezu beliebige Strukturen bieten, die mit den klassischen abrasiven Verfahren nicht oder nur schwer realisierbar sind. Innerhalb der Maschinenklasse der digitalen Fabrikatoren stellen die 3D-Drucker die wichtigste Teilklasse der additiven, also anhäufenden, aufbauenden Fabrikatoren dar. Die wichtigsten Techniken des 3D-Druckens sind das selektive Laserschmelzen (SLM) und das Elektronenstrahlschmelzen für Metalle und das selektive Lasersintern (SLS) für Polymere, Keramik und Metalle, die Stereolithografie (SLA) und das Digital Light Processing für flüssige Kunstharze und das Multijet- oder Polyjet-Modeling (z.B. Tintenstrahldrucken) sowie das Fused Deposition Modeling (FDM) für Kunststoffe und teilweise Kunstharze. Nachfolgend werden einige Ansätze skizziert, bei denen mit Hilfe additiver Methoden Transmissionsoptiken erzeugt werden.

Die DE 10 2009 008 997 A1 schlägt ausgehend von einem Hinweis auf Brillengläser, bei denen Teilbereiche unterschiedliche lichtbrechende Wirkung aufweisen, lichtlenkende Strukturen vor, die aus einer Vielzahl von miniaturisierten Elementen bestehen. Jedes Element besteht aus einer Vielzahl von Tröpfchen aus einem lichtdurchlässigen oder transparenten Material, die auf einem Substrat mit einer planen Begrenzungsfläche abgelegt sind und deren etwa halbkugelige Wölbung von dem Substrat ab ragt. Die Tröpfchen weisen unterschiedliche Durchmesser auf, so dass jedes Element mit der Vielzahl von Tröpfchen ein miniaturisiertes Teil-Prisma oder eine Teil-Linse oder eine andere bestimmte Optik bildet. Dem Dokument entnimmt man ferner ein Verfahren zur Herstellung von lichtlenkenden Strukturen auf einem lichtdurchlässigen oder transparenten Substrat. Auf das Substrat wird mittels Tintenstrahldruck transparente oder transluzente Druckfarbe in Tröpfchenform aufgebracht. Dabei werden Tröpfchen gleicher und ungleicher Größe zur Erzeugung von miniaturisierten lichtlenkenden Elementen aufgebracht, wobei mehrere derartiger Elemente nebeneinander aufgebracht werden, die gemeinsam die lichtlenkende Struktur bilden wie ein Prisma oder eine Linse.

Ein optisches Element, bei dem auf ein transparentes Substrat mit Hilfe eines 3D-Druckverfahrens, nämlich insbesondere mit einem "Drop on Demand" Tintenstrahldrucker (DOD inkjet printer) lichtleitende Strukturen und insbesondere ein optisches Prisma aufgebracht ist, sowie ein Verfahren zu dessen Herstellung ist auch in der WO 2010/091888 A1 beschrieben. Dort ist auch angegeben, dass aus der DE 10 2005 039 113 A1 bereits das Aufbringen zylindrischer Mikrolinsen auf ein Substrat mit Hilfe eines Mikrojet Druckverfahrens beschrieben ist. Die WO 2014/108364 A1 schlägt als Druckmaterial zur Herstellung optischer Elemente z.B. Silikon, eine Mischung aus Silikon und Acryl, ein epoxymodifiziertes kationisches UV aushärtbares Silikon vor.

Die EP 2 878 989 A1 schlägt vor, ausgehend von einem Einstärkenbrillenglasfertigfabrikat ein Progressivbrillenglas mit Hilfe eines 3D-Druckverfahrens herzustellen.

Die WO 2015/014381 A1 beschreibt die Verwendung additiver Herstellungsprozesse, wie z.B. Stereolithografie (SLA), Tintenstrahldrucken, selektives Lasersintern (SLS), selektives Laserschmelzen (SLM) oder Fused Deposition Modeling (FDM) zur Herstellung transparenter ophthalmischer Linsen. Das Dokument beschreibt die Herstellung derartiger Linsen durch Nebeneinanderstellen von ein dreidimensionales Gitter bildenden Volumenelementen (Voxeln) mit einer Ausdehnung zwischen 0,1 µm und 500 µm in einer Richtung in einer vorbestimmen Anordnung, welche z.B. in einer CAD (Computer Aided Design) Datei definiert sein kann. Jedes Volumenelement (Voxel) besteht aus einer Zusammensetzung mit wenigstens einem Polymer oder Vorpolymer oder Monomer. Zwischen den Volumenelementen (Voxeln) wird jeweils eine Konnektivität durch Ausbildung einer chemischen oder mechanischen Bindung hergestellt. Als geeignete Polymere gibt die Schrift Polyolefine wie z.B. Cycloolefinpolymere, Polyacrylate wie z.B. Polymethyl(meth)acrylate, Poly(meth)acrylate, Polyethyl(meth)acrylate, Polybutyl(meth)acrylate, Polyisobutyl(meth)acrylate, Polyester, Polyamide, Polysiloxane, Polyimide, Polyurethane, Polythiourethane, Polycarbonate, Polyallyle, Polysulfide, Polyvinyle, Polyarylene, Polyoxide und Polysulfone, and Mischungen davon an. Als geeignete Monomere oder Vorpolymere sind in dem Dokument Olefine, Acryle, Epoxide, organische Säuren, Carboxylsäuren, Styrene, Isocyanate, Alkohol, Norbornene, Thiole, Amine, Amide, Anhydride, Allyle, Silikone, Vinylester, Vinylether, Vinylhalide und Episulfide angegeben. Die Monomere oder Vorpolymere können thermisch oder strahlungsinduziert aushärtbar sein. Zur strahlungsindizierten Aushärtung können Photoinitiatoren und ggf. Co-Photoinitiatoren eingesetzt werden.

H.-J. Trost et al., Proc. 2001 Ann. Mtg. ASPE, 10-15 Nov. 2001 (ASPE, Raleigh, NC 2001) pp. 533-536 schlagen z.B. die Herstellung von Brillengläsern mit Brechungsindexgradienten, sog. GRIN-Brillengläser (GRIN = gradient index of refraction) mit Hilfe der Drop-On-Demand (DOD) Technologie vor. Bei dieser Technologie handelt es sich um ein Tintenstrahldruckverfahren, bei dem Tintentropfen dosiert durch eine Düse appliziert werden. Die gewünschte Variation des Brechungsindex wird durch Verwendung unterschiedlicher optischer Tintenmaterialien erreicht. Nach dem Drucken wird das applizierte optische Tintenmaterial thermisch oder durch UV-Licht ausgehärtet. Das Dokument zeigt die Möglichkeit der Herstellung von Linsen mit radialen und/oder axialen Brechungsindexgradienten.

Auch die WO 2015/102938 A1 beschreibt die Herstellung von Linsen aus Volumenelementen (Voxeln) mit Hilfe eines 3D-Druckverfahrens. Es werden Schichten mit unterschiedlichen dielektrischen Materialien gestapelt und auf diese Weise GRIN-Optiken erzeugt.

Weiterhin beschreibt die WO 2014/179780 A1 die Herstellung von GRIN-Optiken mittels 3D-Druck zur Erzeugung von optischen GRIN Strukturen mit geringer Dispersion. Der Gradient des Brechungsindex wird über die Variation der Nanopartikelkonzentration in der organischen Matrix erzeugt. Als mögliche Materialien für diese Nanopartikel werden ZnS, ZrO₂, ZnO, BeO, AlN, TiO₂, SiO₂. Die organische Matrix kann nach Angabe in dem Dokument z.B. aus Di(ethylenglykol)diacrylat, Neopentylglykoldiacrylat, Hexandioldiacrylat, Bisphenol-A- Novolak Epoxy Harz (SU8), 2-Hydroxyethylmethacrylat (HEMA), Polyacrylat, Polymethacrylat, Polymethylmethacrylat (PMMA), Styren und Poly[(2,3,4,4,5,5-Hexafluorotetrahydrofuran-2,3-diyl)(1,1,2,2-tetrafluoroethylen)] (CYTOP) bestehen.

Obwohl sich mit verschiedenen Methoden Brillengläser herstellen lassen, die dem ästhetischen Empfinden vieler Menschen Rechnung tragen, besteht weiterer Verbesserungsbedarf.

Die JP 2004 157487 A beschreibt ein Bifokalglas, welches aus einer Mehrzahl an Mikrolinsensätzen zusammengesetzt ist. Jeder der Mikrolinsensätze hat einen festen Fokus oder einen festen Brechungsindex. Mit Hilfe einer Flüssigkristallanordnung kann zwischen den Mikrolinsensätzen umgeschaltet werden.

Die JP 2003 029216 A beschreibt eine Lesebrille. Die Rückflächen der Brillengläser dieser Lesebrille weisen im Nahteil und ggf. in einem zwischen Nahteil und Fernteil befindlichen Zwischenbereich lokale Krümmungsänderungen auf. Es gibt ineinander verschachtelt angeordnete Gruppen von gleichartig gekrümmten hexagonalen Rückflächensegmenten. Jede der Gruppen stellt eine andere Fokuslänge bereit.

Die JP H05 313 107 A beschreibt eine Kontaktlinse, die aus einem Stab gefertigt ist, der aus einem Bündel von Fasern besteht. Es gibt mehrere Gruppen von Fasern. Alle Fasern einer Gruppe haben denselben Brechungsindex. Die Fasern unterschiedlicher Gruppen unterscheiden sich im Brechungsindex. Aus jeder Faser resultiert eine Mikrolinse in der fertigen Kontaktlinse. Die Kontaktlinse besteht aufgrund des Herstellungsprozesses aus mehreren ineinander verschachtelt angeordneten Gruppen von Mikrolinsen. Jede Mikrolinsengruppe stellt aufgrund des innerhalb der Gruppe einheitlichen Brechungsindex eine Fokusebene bereit, die sich von der Fokusebene jeder anderen Gruppe unterscheidet.

Die Aufgabe der Erfindung besteht darin, ein Verfahren zum Herstellen eines Brillenglases bereitzustellen, bei dem wenigstens einer der oben als störend empfundenen Faktoren herkömmlicher Brillengläser verbessert wird.

Die Aufgabe der Erfindung besteht weiter darin, ein Brillenglas bereitzustellen, bei dem wenigstens einer der oben als störend empfundenen Faktoren herkömmlicher Brillengläser verbessert wird.

Die verfahrensbezogene Aufgabe wird durch ein Verfahren zum Herstellen eines Brillenglases mit den Merkmalen des Patentanspruchs 1 gelöst. Die produktbezogene Aufgabe wird durch ein Brillenglas gelöst, welches die Merkmale des Patentanspruchs 3 aufweist. Vorteilhafte Ausführungen und Weiterbildungen der Erfindung sind Gegenstand der Unteransprüche.

Alle erfindungsgemäßen Varianten haben gemein, dass das jeweilige Brillenglas wenigstens zwei Volumenelementgruppen umfasst, nämlich eine erste Volumenelementgruppe, welche eine Mehrzahl an ersten Volumenelementen umfasst, wobei die Mehrzahl an ersten Volumenelementen in der Art von Gitterpunkten eines geometrischen Gitters ein erstes Teilgitter bildend angeordnet sind und wobei die ersten Volumenelemente zusammen ein erstes Teil des Brillenglases bilden, das die dioptrische Wirkung für das Sehen für einen ersten Objektabstand besitzt. Das Brillenglas umfasst ferner eine zweite Volumenelementgruppe, welche in entsprechender Weise eine Mehrzahl an zweiten Volumenelementen umfasst, wobei die Mehrzahl an zweiten Volumenelementen in der Art von Gitterpunkten eines geometrischen Gitters ein zweites Teilgitter bildend angeordnet sind und wobei die zweiten Volumenelemente zusammen ein zweites Teil des Brillenglases bilden, das die dioptrische Wirkung für das Sehen für einen zweiten von dem ersten Objektabstand verschiedenen Objektabstand besitzt. Bei allen Varianten des erfindungsgemäßen Brillenglases sind das erste Teilgitter und das zweite Teilgitter sich jeweils durchsetzend ineinander (z.B. verschoben oder versetzt) angeordnet.

Ein Gitter in der Geometrie ist eine lückenlose und überlappungsfreie Partition eines Bereichs des Raumes durch eine Menge von Gitterzellen. Die Gitterzellen werden definiert durch eine Menge von (fiktiven oder imaginären) Gitterpunkten, die untereinander durch eine Menge von (fiktiven oder imaginären) Gitterlinien verbunden sind.

Dass sich das erste und das zweite Teilgitter durchsetzen bedeutet, dass das erste Teilgitter und das zweite Teilgitter einen Raum miteinander gemeinschaftlich haben, ohne ganz zusammenzufallen. Durchsetzend ineinander verschoben bedeutet im Rahmen der vorliegenden Erfindung eine Anordnung in der Art beispielsweise einer Zinkblendestruktur, die sich als Kombination zweier ineinander gestellter kubisch-flächenzentrierter Teilgitter beschreiben lässt, die um 1/4 der Raumdiagonale gegeneinander verschoben angeordnet sind. Umfasst sein sollen auch (einlagige) Schichtgitter, die um ein bestimmtes Maß eines in der Schichtfläche liegenden Vektors gegeneinander verschoben sind. Die beiden ersten und zweiten Teilgitter brauchen auch nicht von identischer Gestalt sein. Entscheidend ist vielmehr, dass die beiden ersten und zweiten Teilgitter keine makroskopische räumliche Trennung der dioptrischen Wirkung für das Sehen bei unterschiedlichen Objektabständen bereitstellen.

Das erste Teil des Brillenglases, das die dioptrische Wirkung für das Sehen für einen ersten Objektabstand bereitstellt, kann z.B. dem Nahbereich und das zweite Teil des Brillenglases, das die dioptrische Wirkung für das Sehen für einen zweiten Objektabstand bereitstellt, kann z.B. dem Fernbereich eines herkömmlichen Brillenglases entsprechen. Die erfindungsgemäße Anordnung der ersten und zweiten Teilgitter stellt demnach eine dreidimensionale Struktur bereit, bei der die Fern- und Nahbereiche quasi ineinander verschachtelt vorliegen. Selbstverständlich können der erste Objektabstand auch der gewöhnliche Abstand Auge - Bildschirm und der zweite Objektabstand der gewöhnliche Leseabstand sein. Derartige Brillengläser sind für die Büroarbeit oder dergleichen geeignet.

Das erste Teil und das zweite Teil des Brillenglases stellen demnach zusammenfallende Flächenbereiche des Brillenglases dar, durch welche der Brillenträger bei bestimmungsgemäßem Gebrauch blickt. Typische Flächengrößen dieser Bereiche liegen zwischen 0,3 cm² und 7 cm², vorzugsweise zwischen 0,5 cm² und 6 cm², weiter vorzugsweise zwischen 0,8 cm² und 5 cm² und schließlich noch weiter vorzugsweise zwischen 1 cm² und 4 cm².

Das Brillenglas kann sich bei entsprechender Ausführung dadurch auszeichnen, dass
- keine sichtbaren Bifokal- oder Trifokalbereiche vorliegen
- kein Progressionskanal einer Gleitsichtbrille benötigt wird und somit alle damit zusammenhängenden Individualisierungsparameter obsolet werden (Progressionskanallänge, Inset, Fassungsform, Gleitsicht-Profil, Ausgewogenheit der bei konventionellen Gleitsichtgläsern unvermeidbaren Bildfehlerverteilung)
- die Addition (der Unterschied zwischen den Foki) unberührt bleibt, wobei die Anzahl der Foki nur durch die Anzahl der unterschiedlichen, individuell eingestellten Voxel (erste, zweite und ggf. weitere Volumenelementgruppen) begrenzt wird
- unter anderem die folgenden Parameter unberührt bleiben können:
   Hornhautscheitelabstand (HSA), Vorneigung und Fassungsscheibenwinkel sofern dies gewünscht ist

Unberührt bedeutet, dass diese Parameter wie Addition, Hornhautscheitelabstand, Vorneigung und Fassungsscheibenwinkel beim Design der erfindungsgemäßen Brillengläser genauso berücksichtigt werden, wie bei herkömmlichen Brillengläsern nach dem Stand der Technik.

Neben diesen naheliegenden Anwendungen im Bereich der Gleitsicht- und Multifokalgläser bietet die beschriebene Ausführung Ansätze die kosmetischen Probleme von Einstärkengläsern abzumildern. Dazu besteht die Möglichkeit, die optische Korrektur nicht mehr ausschließlich über die relative Lage der optischen Flächen bei Berücksichtigung eines konstanten Brechungsindices einzubringen, wie dies bei herkömmlichen Brillengläsern der oben zum Stand der Technik beschriebenen Art der Fall ist.

Hergestellt werden die Volumenelementgruppen nach der Erfindung mit Hilfe eines additiven Fertigungsverfahrens. Das erfindungsgemäße Verfahren zum Herstellen eines Brillenglases umfasst konkret die folgenden Verfahrensschritte:
- additives Fertigen einer ersten Volumenelementgruppe, wobei die erste Volumenelementgruppe eine Mehrzahl an ersten Volumenelementen umfasst, wobei die Mehrzahl an ersten Volumenelementen in der Art von Gitterpunkten eines geometrischen Gitters ein erstes Teilgitter bildend angeordnet sind, wobei die ersten Volumenelemente zusammen ein erstes Teil des Brillenglases bilden, das die dioptrische Wirkung für das Sehen für einen ersten Objektabstand besitzt
- additives Fertigen einer zweiten Volumenelementgruppe, wobei die zweite Volumenelementgruppe eine Mehrzahl an zweiten Volumenelementen umfasst, wobei die Mehrzahl an zweiten Volumenelementen in der Art von Gitterpunkten eines geometrischen Gitters ein zweites Teilgitter bildend angeordnet sind, wobei die zweiten Volumenelemente zusammen ein zweites Teil des Brillenglases bilden, das die dioptrische Wirkung für das Sehen für einen zweiten von dem ersten Objektabstand verschiedenen Objektabstand besitzt.

Das Verfahren ist erfindungsgemäß dadurch gekennzeichnet, dass das erste Teilgitter und das zweite Teilgitter beim additiven Fertigen sich jeweils durchsetzend ineinander (z.B. verschoben oder versetzt) angeordnet werden.

Die Verfahrensschritte additives Fertigen der ersten Volumenelementgruppe und additives Fertigen der zweiten Volumenelementgruppe sollen nicht zwingend erfordern, dass zuerst die erste Volumenelementgruppe und dann die zweite Volumenelementgruppe fertiggestellt werden. Vielmehr können zunächst ein oder mehrere Volumenelemente der ersten Volumenelementgruppe additiv erzeugt werden, dann wiederum ein oder mehrere Volumenelemente der zweiten Volumenelementgruppe, dann wieder ein oder mehrere Volumenelemente der ersten Volumenelementgruppe usw. bis die beiden Volumenelementgruppen in der erfindungsgemäßen Anordnung entsprechend zweier sich jeweils durchsetzend ineinander verschobenen Teilgitter fertiggestellt sind.

Additive Fertigung - englisch: Additive Manufacturing (AM) bzw. generative Fertigungsverfahren - ist eine umfassende Bezeichnung für die bisher häufig als Rapid Prototyping bezeichneten Verfahren zur schnellen und kostengünstigen Fertigung von Modellen, Mustern, Prototypen, Werkzeugen und Endprodukten. Diese Fertigung erfolgt direkt auf der Basis von rechnerinternen Datenmodellen aus formlosem (z.B. Flüssigkeiten, Pulver u. ä.) oder formneutralem (band-, drahtförmig) Material mittels chemischer und/oder physikalischer Prozesse. Obwohl es sich um urformende Verfahren handelt, sind für ein konkretes Erzeugnis keine speziellen Werkzeuge erforderlich, die die jeweilige Geometrie des Werkstückes gespeichert haben (zum Beispiel Gussformen). Den aktuellen Stand der Technik vermittelt der VDI Statusreport AM 2014. Eine Übersicht über aktuelle 3D-Druckverfahren gibt https://3druck.com/grundkurs-3d-drucker/teil-2-uebersicht-der-aktuellen-3d-druckverfahren-462146/, heruntergeladen am 13.7.2016.

Als besonders geeignet hat sich die Methode des Multi Jet Modelling bzw. PolyJet-Printing herausgestellt. Dieses Verfahren ist z.B. unter der URL https://de.wikipedia.org/wiki/ Multi Jet Modeling, der URL http://www.materialise.de/3d-druck/polyjet oder der URL http://www.stratasys.com/de/3d-drucker/technologies/polyjet-technology, jeweils heruntergeladen am 13.7.2016 beschrieben. PolyJet ist eine leistungsstarke 3D-Drucktechnologie, mit der glatte, präzise Bauteile, Prototypen und Produktionshilfsmittel hergestellt werden können. Dank einer mikroskopischen Schichtauflösung und einer Genauigkeit von bis zu 0,1 mm können damit aus dem für jede Technologie umfangreichsten Spektrum von Materialien dünne Wände und komplexe Geometrien hergestellt werden. Der PolyJet-3D-Druck funktioniert ähnlich wie der Tintenstrahldruck. Statt jedoch Tintentropfen auf Papier zu sprühen, sprühen PolyJet-3D-Drucker Schichten aus vernetzbarem, flüssigem Fotopolymer auf eine Bauplattform. Das Verfahren ist vergleichsweise einfach: In einem ersten Vorbereitungsschritt berechnet die Vorbereitungssoftware automatisch die Platzierung des Fotopolymers und des Stützmaterials (d.h. eines Materials, welches lediglich während des 3D-Drucks zur Positionierung und Stützung des Fotopolymers dient, bis dieses ausgehärtet ist) anhand einer 3D-CAD-Datei. Bei der eigentlichen Produktion sprüht der 3D-Drucker winzige Tröpfchen flüssigen Fotopolymers und vernetzt diese sofort mittels UV-Licht. Auf der Bauplattform sammeln sich so feine Schichten an, aus denen ein oder mehrere präzise 3D-Modelle oder -Teile entstehen. Wenn Überhänge oder komplexe Formen unterstützt werden müssen, sprüht der 3D-Drucker ein entfernbares Stützmaterial. Der Benutzer kann das Stützmaterial leicht von Hand, mit Wasser oder in einem Lösungsmittelbad entfernen. Die Modelle und Bauteile können bevorzugt direkt aus dem 3D-Drucker bearbeitet und verwendet werden, ohne nachhärten zu müssen.

Der 3D-Drucker der Bezeichnung Stratasys (Objet) Eden 260 V ist insbesondere für den erfindungsgemäßen Anwendungsfall geeignet. Die oben in der Beschreibungseinleitung angegebenen und insbesondere in den Dokumenten WO 2014/179780 A1 und WO 2015/014381 A1 genannten Materialien sind für die Verwendung beim erfindungsgemäßen Verfahren geeignet. So sind beispielsweise geeignete Polymere für die ersten und zweiten Volumenelemente Polyolefine wie z.B. Cykloolefinpolymere, Polyacrylate wie z.B. Polymethyl(meth)acrylate, Poly(meth)acrylate, Polyethyl(meth)acrylate, Polybutyl(meth)acrylate, Polyisobutyl(meth)acrylate, Polyester, Polyamide, Polysiloxane, Polyimide, Polyurethane, Polythiourethane, Polycarbonate, Polyallyle, Polysulfide, Polyvinyle, Polyarylene, Polyoxide und Polysulfone, and Mischungen davon an. Als Druckmaterial geeignete Monomere oder Vorpolymere zur Erzeugung der ersten und zweiten Volumenelemente kommen Olefine, Acryle, Epoxide, organische Säuren, Carboxylsäuren, Styrene, Isocyanate, Alkohol, Norbornene, Thiole, Amine, Amide, Anhydride, Allyle, Silikone, Vinylester, Vinylether, Vinylhalide und Episulfide in Betracht. Die Monomere oder Vorpolymere können thermisch oder strahlungsinduziert aushärtbar sein. Zur strahlungsindizierten Aushärtung können Photoinitiatoren und ggf. Co-Photoinitiatoren eingesetzt werden.

Die ersten und zweiten Volumenelemente können auch wie oben beschrieben aus einer mit Nanopartikeln versetzten organischen Matrix bestehen. Die organische Matrix kann z.B. aus Di(ethylenglykol)diacrylat, Neopentylglykoldiacrylat, Hexandioldiacrylat, Bisphenol-A-Novolak Epoxy Harz (SU8), 2-Hydroxyethylmethacrylat (HEMA), Polyacrylat, Polymethacrylat, Polymethylmethacrylat (PMMA), Styren und Poly[(2, 3,4,4,5,5-Hexafluorotetrahydrofuran-2, 3-diyl)(1,1,2,2-tetrafluoroethylen)](CYTOP) bestehen. Mögliche Materialien für die Nanopartikel sind z.B. ZnS, ZrO₂, ZnO, BeO, AlN, TiO₂ und SiO₂. Die eingangs gestellte verfahrensspezifische Aufgabe wird durch ein derartiges erfindungsgemäßes Verfahren zum Herstellen eines Brillenglases vollumfänglich gelöst. Hiermit wird darauf hingewiesen, dass die Erfindung nicht nur auf eine durchsetzende Anordnung zweier Teilgitter beschränkt ist. Vielmehr können auch mehr als zwei Teilgitter für entsprechende sich unterscheidende Objektabstände realisiert werden. Es hat sich aber als vorteilhaft herausgestellt, die Zahl der unterschiedlichen Teilgitter auf nicht mehr als 5, vorzugsweise nicht mehr als vier oder auch nicht mehr als 3 zu beschränken, weil das menschliche Gehirn eine scharfe Wahrnehmung sonst nicht oder nur schwer erlaubt.

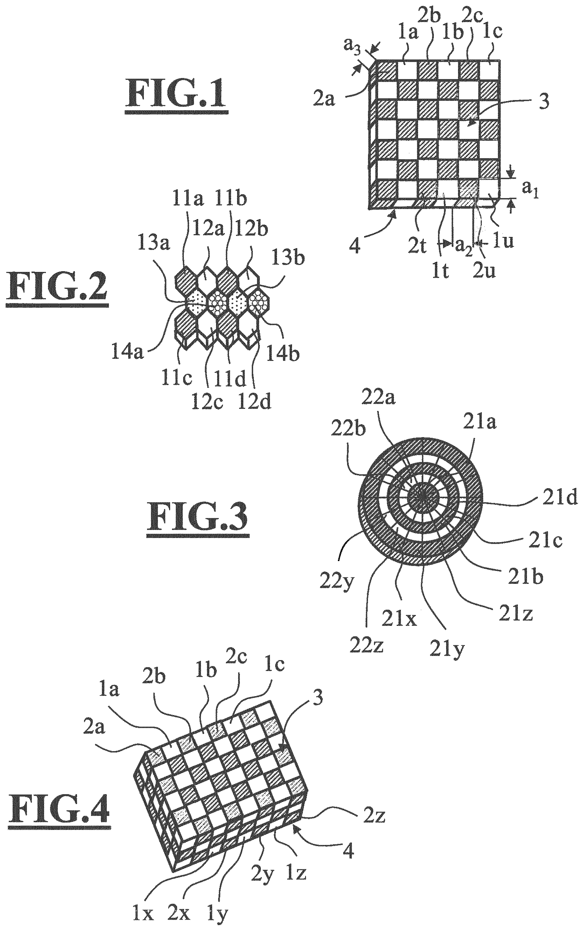

Die oben angegebene produktbezogene Aufgabe kann durch eine der nachfolgend angegebenen Varianten gelöst werden: Ausgangsprodukt ist stets ein Brillenglas mit den nachfolgend angegebenen Merkmalen:
Das erfindungsgemäße Brillenglas umfasst eine erste Volumenelementgruppe, welche eine Mehrzahl an ersten Volumenelementen umfasst, wobei die Mehrzahl an ersten Volumenelementen in der Art von Gitterpunkten eines geometrischen Gitters ein erstes Teilgitter bildend angeordnet sind und wobei die ersten Volumenelemente zusammen ein erstes Teil des Brillenglases bilden, das die dioptrische Wirkung für das Sehen für einen ersten Objektabstand besitzt. Das Brillenglas umfasst ferner eine zweite Volumenelementgruppe, welche in entsprechender Weise eine Mehrzahl an zweiten Volumenelementen umfasst, wobei die Mehrzahl an zweiten Volumenelementen in der Art von Gitterpunkten eines geometrischen Gitters ein zweites Teilgitter bildend angeordnet sind und wobei die zweiten Volumenelemente zusammen ein zweites Teil des Brillenglases bilden, das die dioptrische Wirkung für das Sehen für einen zweiten von dem ersten Objektabstand verschiedenen Objektabstand besitzt. Das erste Teilgitter und das zweite Teilgitter sind sich jeweils durchsetzend ineinander (z.B. verschoben oder versetzt) angeordnet, wobei das erste Teilgitter dreidimensional ausgebildet ist und dass das zweite Teilgitter dreidimensional ausgebildet ist. Durch die dreidimensionale Ausgestaltung beider Teilgitter ergibt sich eine mit der Zahl der Schichten zunehmende Wechselwirkung zwischen den ersten und zweiten Teilen, die für scharfes Sehen in unterschiedlichen Objektabständen ausgelegt sein sollen. Details werden nachfolgend im Zusammenhang mit der Beschreibung zur Figur 4 erläutert. Grundsätzlich wird aber erreicht, dass Licht beim Weg durch das Brillenglas nicht nur zwei Mal, an der Vorder- und Rückfläche gebrochen wird, sondern immer wieder an jeder Grenzschicht zwischen den Teilgittern, aber jeweils um einen geringeren Winkel. Es besteht damit die Möglichkeit den Lichtweg durch das Brillenglas individuell auf den Nutzer zugeschnitten zu optimieren. Dabei kann der Lichtweg lokal beeinflusst werden und größere Lichtbündel, die in herkömmlichen Systemen eng miteinander verbunden bleiben, aufspalten und in kleineren Bündeln genauer steuern.

Die erste Erfindungsvariante geht davon aus, dass die ersten Volumenelemente jeweils ein erstes Oberflächenelement aufweisen und dass die zweiten Volumenelemente jeweils ein zweites Oberflächenelement aufweisen. Unter Oberflächenelement soll dabei eine optische Fläche verstanden werden, durch welche Lichtstrahlen ausgehend von einem Objekt hindurchtreten müssen, um zum Auge zu gelangen. Spezialfälle, sind alle Flächenelemente, die zusammen die Vorder- oder Rückfläche des Brillenglases bilden. Diese Vorder- oder Rückfläche und demgemäß auch die diese bildenden Oberflächenelemente können ggf. auch beschichtet sein. Die Oberflächenelemente können auch innere Grenzflächen zu einem Träger oder zu Oberflächenelementen anderer Volumenelemente bilden.

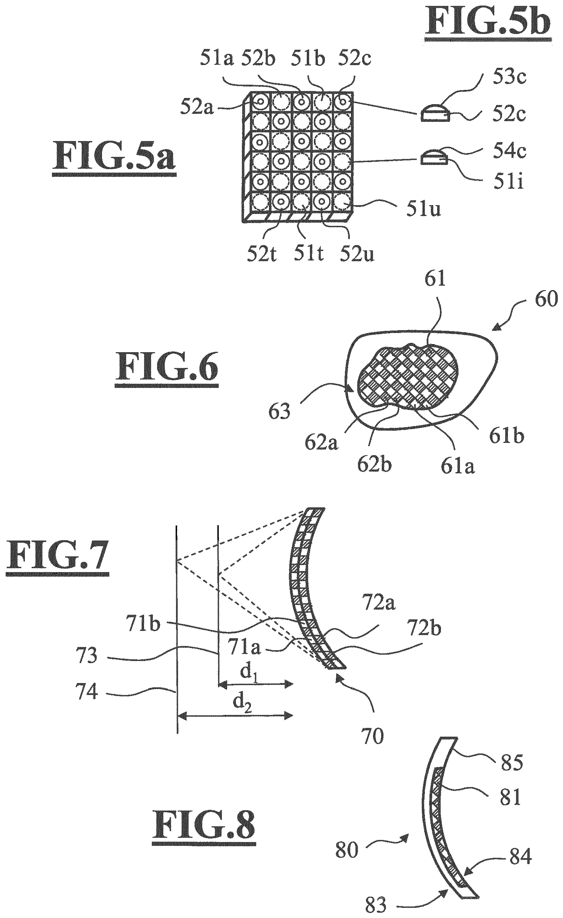

Diese erste Erfindungsvariante ist dadurch gekennzeichnet, dass jeweils eines der ersten Oberflächenelemente der ersten Volumenelemente der ersten Volumenelementgruppe und jeweils eines der zweiten Oberflächenelemente der zweiten Volumenelemente der zweiten Volumenelementgruppe, die aneinander grenzen, winklig zueinander oder eine Stufe bildend angeordnet sind. Details werden nachfolgend im Zusammenhang mit der Beschreibung zur Figur 5 erläutert. Grundsätzlich wird aber erreicht, dass innerhalb eines physisch zusammenhängenden Brillenglases zwei Volumenelementgruppen mit unterschiedlichen Fokuspunkten realisiert werden und dazu keine Bifokalgläser mit ihrer deutlich sichtbaren Kante im Sehfeld benötigt werden. Des Weiteren entfällt der Progressionskanal der Gleitsichtgläser, der mit seiner kontinuierlichen Veränderung der optischen Wirkung zwingend astigmatische Verzerrungen am Rand des Brillenglases zur Folge hat. In der Folge entstehen kleine Kanten zwischen den Oberflächen der Volumenelementgruppen, die dem Betrachter deutlich weniger ins Auge fallen, als bei bekannten Lösungen.

Die zweite Erfindungsvariante geht von folgenden zwei Konstellationen aus, die auch kumulativ vorliegen können:
(i) die ersten Volumenelemente weisen jeweils ein erstes Oberflächenelement der oben beschriebenen Art auf und die zweiten Volumenelemente weisen in entsprechender Weise jeweils ein zweites Oberflächenelement auf und
(ii) die ersten Volumenelemente bestehen aus einem ersten Material und die zweiten Volumenelemente bestehen aus einem zweiten von dem ersten Material sich unterscheidenden Material,
Erfindungsgemäß ist vorgesehen, dass ein Übergang zwischen einem der ersten Volumenelemente zu einem angrenzenden der zweiten Volumenelemente durch eine graduelle Änderung des Materials und/oder durch eine graduelle Änderung einer Orientierung der jeweiligen aneinander grenzenden ersten und zweiten Oberflächenelemente der aneinander grenzenden ersten und zweiten Volumenelemente erfolgt. Während bei der ersten Erfindungsvariante der Wechsel von einem Fokus zum nächsten sprunghaft erfolgt, erfolgt er bei der zweiten Erfindungsvariante in der Regel graduell. Weitere Details sind in den letzten vier Beschreibungsabschnitten zusammengefasst. Grundsätzlich wird aber erreicht, dass die verbleibenden Kanten in der optisch wirksamen Fläche, wie sie bei der zweiten Variante zu beobachten sind, bei dieser Ausführungsform weiter abgemildert werden können und damit eine weitere Verbesserung der kosmetischen Eigenschaften erreicht werden. Daneben führen graduelle Übergänge zwischen den Volumenelementgruppen zu geringerer Streulichtbildung an den verschiedenen Grenzflächen zwischen den Volumenelementgruppen. Die Berechnung der einzelnen Volumenelementgruppen und die Einstellung der jeweiligen Brechungsindizes ist deutlich komplizierter als in der zweiten Variante, so dass mehr Rechenleistung für das Entwerfen/Design vorgehalten werden muss.

Die dritte Variante besteht darin, dass auf der ersten Volumenelementgruppe und der zweiten Volumenelementgruppe eine glättende Hartstoff-Beschichtung angeordnet ist. Unter einer glättenden Hartstoff-Beschichtung versteht man eine Schicht, die die Oberflächenrauheit und Oberflächenstrukturen des Brillenglassubstrates mindert.

Das Brillenglas weist mit dieser glättenden Hartstoff-Beschichtung bevorzugt eine Oberflächenrauigkeit Ra von < 10 nm auf. Weiter bevorzugt liegt die Oberflächenrauigkeit Ra des Brillenglases über alle optischen Flächen jeweils in einem Bereich von 1,0 nm bis 8,0 nm, besonders bevorzugt in einem Bereich von 3,0 nm bis 7,0 nm und ganz besonders bevorzugt in einem Bereich von 4,0 nm bis 6,0 nm. Vorstehend genannte Werte für die Oberflächenrauigkeit Ra beziehen sich jeweils auf die Vorderfläche und die Rückfläche des Brillenglases. Die Oberflächenrauigkeit Ra in Bezug auf das fertige Brillenglas wird vorzugsweise mittels Weißlichtinterferometrie, vorzugsweise mit dem Gerät NewView 7100 (Firma Zygo Corporation), bestimmt.

Die Zusammensetzung der glättenden Hartstoff-Beschichtung kann wenigstens ein Silanderivat (R⁴O)Si(OR¹)(OR²)(OR³) enthalten, wobei R¹, R², R³, R⁴ gleich oder verschieden voneinander, substituiert oder nicht substituiert sein können und R¹, R², R³, R⁴ aus der Gruppe bestehend aus Alkyl, Acyl, Alkylenacyl, Cycloalkyl, Aryl und Alkylenaryl ausgewählt sein kann. Alternativ oder zusätzlich kann die Zusammensetzung der glättenden Hartstoff-Beschichtung wenigstens ein Silanderivat R⁶R⁷₃₋ₙSi(OR⁵)ₙ enthalten, wobei R⁵ aus der Gruppe bestehend aus Alkyl, Acyl, Alkylenacyl, Cycloalkyl, Aryl und Alkylenaryl ausgewählt sein kann, R⁵ substituiert oder nicht substituiert sein kann, R⁶ ein organischer Rest ist, welcher eine Epoxidgruppe umfasst, R⁷ aus der Gruppe bestehend aus Alkyl, Cycloalkyl, Aryl und Alkenylaryl ausgewählt sein kann, R⁷ substituiert oder nicht substituiert sein kann. Weitere Beispiele für derartige glättende Hartstoff-Beschichtungen sind zu finden in EP 2 578 649 A1, DE 10 2005 059 485 A1 und EP 2 385 086 A1. Grundsätzlich ist es dadurch möglich, dass die Struktur bestehend aus unterschiedlichen Volumenelementen für den Beobachter von außen nicht oder weniger auffällt während dem Brillenglas eine Kratzfestigkeit verliehen wird. Die kosmetisch glättenden Eigenschaften dieser Variante sind besonders wichtig, wenn das optische System auf den in Variante zwei beschriebenen Parametern mit scharfen Kanten und sprunghaften Wechseln beruht. Ein weiterer Vorteil ist die bessere Reinigungsfähigkeit der beschichteten Fläche, da weniger Gräben vorhanden sind, in denen sich Schmutz sammeln kann. Gegenüber der unbeschichteten Variante ergeben sich weitere Vorteile im Bereich der Aufbringung einer Stempelfigur (Zentrierkreuz, Messkreise etc.), die ggf. weiter per Tampondruck oder Inkjet-Druckverfahren auf die Brillenglasoberfläche gedruckt werden können.

Die vierte Erfindungsvariante ist dadurch gekennzeichnet, dass die erste Volumenelementgruppe und die zweite Volumenelementgruppe auf einer Fläche eines Trägers angeordnet sind, welcher einen (räumlichen) Brechungsindexgradienten aufweist. Wie in der Beschreibungseinleitung beschrieben ist, bietet ein Brechungsgradient die Möglichkeit, eine gewünschte dioptrische Wirkung eines Körpers zu erzeugen, die in geringerem Maß von dessen geometrischer Gestalt abhängt. Auf diese Weise ist es möglich, dass das Brillenglas insgesamt dünner ausgeführt sein kann als wenn ein Träger mit räumlich konstantem Brechungsindex verwendet würde. Die Dicke des Trägers beträgt in einem Bereich, auf dem die erste Volumenelementgruppe und die zweite Volumenelementgruppe angeordnet sind, vorzugsweise zwischen 0,1 und 5 mm, weiter vorzugsweise zwischen 0,5 und 3 mm, höchst vorzugsweise zwischen 1 und 2 mm.

Die eingangs gestellte produktbezogene Aufgabe wird durch jede der vorstehend beschriebenen vier Varianten vollumfänglich gelöst. Die vorstehend beschriebenen Erfindungsvarianten lassen sich auch in beliebiger Weise kombinieren, wie beispielhaft im Nachfolgenden im Detail ausgeführt ist.

Grundsätzlich ist es möglich, dass die ersten und zweiten Volumenelemente aus demselben Material bestehen. Die Bereitstellung unterschiedlicher dioptrischer Wirkungen für das scharfe Sehen bei unterschiedlichen Objektabständen wird dann durch die jeweilige Oberflächengeometrie der einzelnen ersten und zweiten Volumenelemente und/oder die relative Position und Ausrichtung der einzelnen ersten und zweiten Volumenelemente zueinander und/oder die äußere Geometrie des die beiden ersten und zweiten Teilgitter umfassenden Gitters bestimmt bzw. festgelegt. Der Begriff Oberflächengeometrie umfasst zum einen die Flächengröße als auch die Flächenform, insbesondere auch die lokale Krümmung der Oberfläche des jeweiligen Volumenelements.

Alternativ ist es entsprechend obigen Ausführungen möglich, dass die ersten Volumenelemente aus einem ersten Material bestehen und dass die zweiten Volumenelemente aus einem zweiten von dem ersten Material sich unterscheidenden Material bestehen. Die Bereitstellung unterschiedlicher dioptrischer Wirkungen für das scharfe Sehen bei unterschiedlichen Objektabständen kann dann nicht nur durch die jeweilige Oberflächengeometrie der einzelnen ersten und zweiten Volumenelemente und/oder die relative Position und Ausrichtung der einzelnen ersten und zweiten Volumenelemente zueinander und/oder die äußere Geometrie des die beiden ersten und zweiten Teilgitter umfassenden Gitters bestimmt bzw. festgelegt werden, sondern auch durch die sich unterscheidenden lichtbrechenden Eigenschaften der jeweiligen ersten und zweiten Volumenelemente. Insbesondere dann, wenn das erste Material einen ersten Brechungsindex aufweist und das zweite Material einen zweiten von dem ersten Brechungsindex unterschiedlichen Brechungsindex aufweist, spielt nicht nur die Orientierung der optisch wirksamen Oberflächen der Volumenelemente eine Rolle, sondern auch deren Brechkraft. Die Einschränkung der Formgebung im Hinblick auf ästhetisches Empfinden entfällt weitgehend oder reduziert sich zumindest im Vergleich zu herkömmlichen Brillengläsern erheblich. Die Verwendung eines additiven Fertigungsverfahrens, insbesondere die Verwendung des MultiJet- oder PolyJet-Printing/Modeling erlaubt die Realisierung unstetiger und/oder unstetig differenzierbarer optischer Oberflächen unter geringem Aufwand. Es entfällt die makroskopische räumliche Trennung von z.B. Nah- und Fernbereich (allgemein: von einem ersten Objektentfernungsbereich und einem zweiten Objektentfernungsbereich) und damit verbunden entfallen die bei Gleitsichtgläsern herkömmlicher Art zum Rand hin auftretenden astigmatischen Verzerrungen.

Verwendet man Materialien unterschiedlicher Brechungsindices zur Realisierung der ersten und zweiten Volumenelemente, ist es möglich, die dioptrischen Wirkungen für die unterschiedlichen Objektentfernungen durch Anordnung der ersten und zweiten Volumenelemente zu erzeugen, dass diese zusammen eine glatte, ggf. sogar ebene Oberfläche ergeben, die bei bestimmungsgemäßem Gebrauch des erfindungsgemäßen Brillenglases bzw. der Brille mit dem erfindungsgemäßen Brillenglas entweder in Richtung des Objekts (d.h. ggf. mit einer Beschichtung versehen die Vorderfläche des Brillenglases bildend) und/oder in Richtung des Auges (d.h. ggf. mit einer Beschichtung versehen die Rückfläche des Brillenglases bildend) ausgerichtet ist. Verwendet man dagegen Materialien gleicher Brechungsindices oder gar identische Materialien zur Realisierung der ersten und zweiten Volumenelemente, so werden die Oberflächen der ersten und zweiten Volumenelemente an den Orten, an denen zwei unterschiedliche Volumenelemente aneinander grenzen, unterschiedlich zueinander orientiert sein, um die erfindungsgemäße Eigenschaft der Bereitstellung einer makroskopischen räumlichen Vereinigung der Bereiche für unterschiedliche Objektentfernungen zu erreichen. Insbesondere kann die Erfindung in diesem Fall dadurch gekennzeichnet sein, dass die ersten Volumenelemente jeweils ein erstes Oberflächenelement aufweisen und dass die zweiten Volumenelemente jeweils ein zweites Oberflächenelement aufweisen und dass jeweils eines der ersten Oberflächenelemente und jeweils eines der zweiten Oberflächenelemente, die aneinander grenzen, winklig zueinander angeordnet sind.

Zusammenfassend kann der Übergang zwischen einem ersten Volumenelement und einem zweiten Volumenelement sprunghaft durch sprunghafte Änderung des Materials und/oder sprunghafte Änderung der Orientierung der jeweiligen aneinander grenzenden Oberflächenelemente der benachbarten Volumenelemente erfolgen.

Alternativ kann der Übergang zwischen einem ersten Volumenelement und einem zweiten benachbarten Volumenelement auch graduell oder gleitend, mit ähnlichen Eigenschaften wie der Progressionskanal beim herkömmlichen Gleitsichtglas erfolgen. Dies kann entsprechend durch graduelle Änderung des Materials und/oder graduelle Änderung der Orientierung der jeweiligen optischen Fläche der benachbarten Volumenelemente erfolgen.

Das erste Teilgitter kann zweidimensional ausgebildet sein. Alternativ oder zusätzlich kann das zweite Teilgitter zweidimensional ausgebildet sein. Unter zweidimensionaler Ausbildung eines (Teil-)Gitters soll im Rahmen der vorliegenden Anmeldung ein einlagiges Schichtgitter verstanden werden. Anders ausgedrückt sollen alle das (Teil-)Gitter bildenden Volumenelemente in einer Ebene liegen. In dem Fall, dass beide Teilgitter zweidimensional ausgebildet sind, ist es möglich, dass ein das erste Teilgitter und das zweite Teilgitter umfassendes Gitter wieder ein zweidimensionales Gitter bilden, nämlich dann, wenn die beiden Teilgitter in der vorstehend beschriebenen Ebene zueinander verschoben sind. Die beiden Teilgitter können z.B. in der Art einer schachbrettartigen Struktur vorliegen, bei der gedanklich die hellen Felder des Schachbretts den ersten Volumenelementen des ersten Teilgitters und die dunklen Felder des Schachbretts den zweiten Volumenelementen des zweiten Teilgitters entsprechen.

Selbst wenn sowohl das erste Teilgitter als auch das zweite Teilgitter zweidimensional ausgebildet sind, müssen diese nicht zwangsläufig in der Ebene gegeneinander verschoben sein, in der die Volumenelemente angeordnet sind. Es ist sowohl Verschiebung der beiden Teilgitter zueinander in einer ausschließlich senkrecht zu dieser Ebene ausgerichteten Richtung oder eine Verschiebung in jeder beliebigen Raumrichtung möglich.

Das erste Teilgitter kann auch dreidimensional ausgebildet sein. Alternativ oder zusätzlich kann auch das zweite Teilgitter dreidimensional ausgebildet sein. Die beiden Teilgitter können wiederum in jeder beliebigen Raumrichtung gegeneinander verschoben sein. Insbesondere bei einer dreidimensionalen Ausbildung werden sich die Foki für die beiden unterschiedlichen Objektabstände mit jeder Schicht beeinflussen. Anders ausgedrückt wird bei dreidimensionaler Auslegung der Teilgitter eine mit der Zahl der Schichten zunehmende Wechselwirkung zwischen den ersten und zweiten Teilen bestehen, die für scharfes Sehen in unterschiedlichen Objektabständen ausgelegt sein sollen. Details werden nachfolgend im Zusammenhang mit der Beschreibung zur Figur 4 erläutert.

Der erste Objektabstand kann sich von dem zweiten Objektabstand z.B. um mehr als 5 cm oder um mehr als 10 cm oder um mehr als 15 cm oder um mehr als 20 cm oder um mehr als 30 cm oder sogar um mehr als 50 cm unterscheiden. Anders ausgedrückt sind die Fokusebenen für den die die ersten bzw. zweiten Volumenelemente umfassenden Teile jeweils konzipiert sind, um die vorstehend angegebenen Werte zueinander beabstandet. Der Brillenträger ist in der Lage, bei gleicher Blickrichtung Gegenstände, die in diesen Fokusebenen angeordnet sind, scharf zu sehen. Eine Blickänderung, wie dies bei Multifokalgläsern herkömmlicher Art erforderlich ist, ist mit Hilfe eines Brillenglases der erfindungsgemäßen Art nicht erforderlich.

Es ist grundsätzlich möglich, dass das Brillenglas ausschließlich aus den ersten und zweiten Volumenelementgruppen besteht oder gebildet wird. Es ist auch möglich, dass eine oder mehrere weitere Volumenelementgruppen, der den ersten und zweiten Volumenelementgruppen entsprechenden Art vorhanden sind und dass das Brillenglas ausschließlich aus diesen Volumenelementgruppen unterschiedlicher Art besteht, die jeweils Teile des Brillenglases bilden, die die dioptrische Wirkung für das Sehen für gleiche oder sich unterscheidende Objektabstände bereitstellen. Eine besonders vorteilhafte Ausführungsvariante des erfindungsgemäßen Brillenglases ist dadurch gekennzeichnet, dass die erste Volumenelementgruppe und die zweite Volumenelementgruppe auf einer Fläche eines Trägers angeordnet sind. Der Träger kann z.B. mit Hilfe eines Verfahrens wie Abgießen oder ein abrasives Verfahren aus einem Rohling hergestellt worden sein. Die Erfindung sieht jedoch auch vor, dass das erfindungsgemäße Verfahren fakultativ durch den Verfahrensschritt
- additives Fertigen eines Trägers mit einer Fläche, auf der die erste Volumenelementgruppe und die zweite Volumenelementgruppe angeordnet werden
gekennzeichnet sein.

Der Träger kann z.B. eine objektseitige sphärische oder torische oder freigeformte Oberfläche aufweisen und die Fläche, auf der die erste Volumenelementgruppe und die zweite Volumenelementgruppe angeordnet sind, kann die augenseitige Fläche des Trägers sein.
Der Träger kann alternativ auch eine augenseitige sphärische oder torische oder freigeformte Oberfläche aufweisen und die Fläche, auf der die erste Volumenelementgruppe und die zweite Volumenelementgruppe angeordnet sind, kann die objektseitige Fläche des Trägers sein. Bei beiden vorstehend beschriebenen Varianten setzt sich die Gesamtwirkung des Brillenglases aus der Brechkraft der sphärischen oder torischen oder rotationssymmetrisch asphärischen oder freigeformten Fläche und den lichtbrechenden Eigenschaften der Volumenelemente der ersten und der zweiten Volumenelementgruppen zusammen.

Schließlich ist es auch möglich, dass die Fläche, auf der die erste Volumenelementgruppe und die zweite Volumenelementgruppe angeordnet sind, die augenseitige und/oder die objektseitige Fläche des Trägers ist bzw. sind. Die Gesamtwirkung des Brillenglases setzt sich dann im Wesentlichen aus den lichtbrechenden Eigenschaften der Volumenelemente der ersten und der zweiten Volumenelementgruppen zusammen.

Weiter ist es möglich, dass der Träger einen Brechungsindexgradienten aufweist. Wie in der Beschreibungseinleitung beschrieben ist, bietet ein Brechungsgradient die Möglichkeit eine gewünschte dioptrische Wirkung eines Körpers zu erzeugen, die in geringerem Maß von dessen geometrischer Gestalt abhängt.

Auf der ersten Volumenelementgruppe und der zweiten Volumenelementgruppe kann auch eine Beschichtung angeordnet sein. Als Beschichtungen kommen insbesondere sämtliche in der Beschreibungseinleitung genannten Funktionsschichtstrukturen in Betracht. Genannt seien insbesondere solche, die optische Eigenschaften wie Entspiegelung, Verspiegelung, Lichtpolarisierung, Färbung, Selbsttönung usw. sowie mechanische Eigenschaften wie Härtung, Verminderung des Anhaftens von Schmutz oder des Beschlagens usw. und/oder elektrische Eigenschaften wie Abschirmung von elektromagnetischer Strahlung, Leitung von elektrischem Strom usw. und/oder andere physikalische oder chemische Eigenschaften des Brillenglases beeinflussen bzw. ändern.

Schließlich ist es möglich, dass die erste Volumenelementgruppe und die zweite Volumenelementgruppe als vergrabene Strukturen ausgeführt sind. Dadurch wird einerseits z.B. eine spätere Hart- oder Antireflexbeschichtung wesentlich erleichtert (es können z.B. herkömmliche glättende Hartbeschichtungssysteme eingesetzt werden), andererseits bilden Unstetigkeiten bzw. Knicke oder Sprünge der Oberflächen der aneinander grenzenden Volumenelemente keine Kavitäten zur späteren Ansammlung von Verschmutzungen auf der Oberfläche des fertigen Brillenglases. Unter vergrabenen Strukturen versteht man die Einbettung in ein Substratmaterial.

Die oben beschriebene dioptrische Wirkung des erfindungsgemäßen Brillenglases lässt sich mit ersten Volumenelementen erzielen, die jeweils ein Volumen zwischen 1000 µm³ und 1 mm³ aufweisen und/oder mit zweiten Volumenelementen, die jeweils ein Volumen zwischen 1000 µm³ und 1 mm³ aufweisen. Das kleinste mögliche Volumen eines Volumenelements ist durch das Herstellverfahren, z.B. beim MultiJet bzw. PolyJet-Modeling durch die Tropfengröße und z.B. beim SLA-Verfahren durch die Fokusgröße des Lasers, vorgegeben.

Die ersten Volumenelemente können beispielsweise jeweils eine objektseitige Oberfläche zwischen 100 µm² und 1 mm² aufweisen und/oder die zweiten Volumenelemente können jeweils eine objektseitige Oberfläche zwischen 100 µm² und 1 mm² aufweisen. Alternativ oder zusätzlich ist es möglich, dass die ersten Volumenelemente jeweils eine augenseitige Oberfläche zwischen 100 µm² und 1 mm² aufweisen und/oder dass die zweiten Volumenelemente jeweils eine augenseitige Oberfläche zwischen 100 µm² und 1 mm² aufweisen.

Die Zahl der ersten Volumenelemente, die den ersten Teil bilden, liegt vorzugsweise zwischen 50 und 10⁹, weiter vorzugsweise zwischen 100 und 10⁸, schließlich weiter vorzugsweise zwischen 200 und 10⁷ und schließlich noch weiter vorzugsweise zwischen 500 und 10⁶.

Die Zahl der zweiten Volumenelemente, die den zweiten Teil bilden, liegt vorzugsweise zwischen 50 und 10⁹, weiter vorzugsweise zwischen 100 und 10⁸, schließlich weiter vorzugsweise zwischen 200 und 10⁷ und schließlich noch weiter vorzugsweise zwischen 500 und 10⁶.

Die Zahl der ersten und zweiten Volumenelemente liegt vorzugsweise in der gleichen Größenordnung. Das bedeutet, dass die Zahl der ersten Volumenelemente und die Zahl der zweiten Volumenelemente um nicht mehr als den Faktor 10, vorzugsweise nicht mehr als den Faktor 8, weiter vorzugsweise nicht mehr als den Faktor 5 und schließlich weiter vorzugsweise nicht mehr als den Faktor 2 voneinander abweichen.

Die erfindungsgemäße technologische Lösung weist, insbesondere bei Berücksichtigung der durch die oben vorgestellten vorteilhaften Ausführungsformen und Weiterbildungen des erfinderischen Gedankens, folgende Vorteile auf:
Neben den oben beschriebenen Anwendungen im Bereich der Gleitsicht- und Multifokalgläser und den ebenfalls oben beschriebenen Ansätzen, die kosmetischen Probleme insbesondere bei Einstärkengläsern abzumildern, können darüber hinaus keine rein auf Gradientenoptiken beruhenden Systeme gewählt werden (vgl. die obigen Veröffentlichungen WO 2015/102938 A1 und WO 2014/179780 A1), bei denen Plano-Gläser oder sogar physisch plane Platten als Brillenglas generiert werden. Ein sehr gutes Ergebnis ergibt sich aus einer sinnvollen Kombination von optisch aktiven Flächen mit einem Brechungsindex-Gradienten im Substratmaterial. Steigt der Brechungsindex zum Rand des Brillenglases hin an, so kann bei Korrektur myoper Augenfehler die Randdicke des Brillenglases reduziert werden. Bei Verwendung von Kunststoffen liegt der maximale Brechungsindex-Hub von 1.48 auf 1.80, wobei die Realisierbarkeit, durch die notwendigen Wechsel der zugrundeliegenden Chemie, schwierig ist. Mineralglas bietet weitere Steigerungsmöglichkeiten.

In Hinsicht auf das Design des Brillenglases fallen diverse Beschränkungen der derzeitigen Technologie weg. Besonders vorteilhaft ist der Wegfall der Begrenzung auf sphärische bzw. asphärisch rotationssymmetrische Vorderflächen in mit eingeschränktem Lieferbereich in Hinsicht auf die Krümmung. Bei Anwendung der hier beschriebenen Technologien können beliebige Krümmungen und Änderungen von Krümmungen mit oder ohne Folge für die optische Wirkung des Glases realisiert werden. Falls gefordert kann die Änderung der Krümmung durch Änderung des Brechungsindex kompensiert werden.

Eine weitere vorteilhafte Eigenschaft ist der Wegfall der Größenbegrenzung des Brillenglases durch die Beschränkung des Durchmessers der zur Verfügung stehenden Halbfabrikate. Anders als bei den Halbfabrikaten, die herstellungsbedingt auf einen Durchmesser von ca. 80 bis 90 mm beschränkt sind, stellt die maximale Größe des Bauvolumens des 3D-Druckers, die bereits jetzt deutlich darüber liegt und vorteilhafter Weise mehr als 200 x 200 x 200 mm betragen kann, die Herstellungsgrenze dar. Bei Ausschöpfung dieses Volumens lassen sich ganze Brillen, Shields etc. am Stück drucken.

Die Erfindung wird nachfolgend anhand der Zeichnung näher beschrieben. Es zeigen:
- Figur 1: ein erstes Ausführungsbeispiel für die durchsetzend ineinander verschobene Anordnung zweier aus Volumenelementen erster und zweiter Volumenelementgruppen gebildeter Teilgitter
- Figur 2: ein Ausführungsbeispiel für die durchsetzend ineinander verschobene Anordnung von vier aus Volumenelementen erster, zweiter, dritter und vierter Volumenelementgruppen gebildeten Teilgittern
- Figur 3: ein zweites Ausführungsbeispiel für die durchsetzend ineinander verschobene Anordnung zweier aus Volumenelementen erster und zweiter Volumenelementgruppen gebildeter Teilgitter
- Figur 4: ein drittes Ausführungsbeispiel für die durchsetzend ineinander verschobene Anordnung zweier aus Volumenelementen erster und zweiter Volumenelementgruppen gebildeter Teilgitter
- Figur 5: ein viertes Ausführungsbeispiel für die durchsetzend ineinander verschobene Anordnung zweier aus Volumenelementen erster und zweiter Volumenelementgruppen gebildeter Teilgitter
a) Anordnung der Volumenelemente
b) vergrößerte Darstellung jeweils eines der ersten und zweiten Volumenelemente
- Figur 6: ein erstes Ausführungsbeispiel eines erfindungsgemäßen Brillenglases in Draufsicht von der Objektseite (Prinzipskizze)
- Figur 7: ein zweites Ausführungsbeispiel eines erfindungsgemäßen Brillenglases im Querschnitt (Prinzipskizze)
- Figur 8: ein drittes Ausführungsbeispiel eines erfindungsgemäßen Brillenglases im Querschnitt (Prinzipskizze)
- Figur 9: ein viertes Ausführungsbeispiel eines erfindungsgemäßen Brillenglases im Querschnitt (Prinzipskizze)
- Figur 10: ein fünftes Ausführungsbeispiel eines erfindungsgemäßen Brillenglases im Querschnitt (Prinzipskizze)
- Figur 11: ein Ausführungsbeispiel einer Brille mit einem erfindungsgemäßen Brillenglas

Oben wurde ausgeführt, dass das Brillenglas nach der Erfindung wenigstens zwei Volumenelementgruppen umfasst. Die beiden Volumenelementgruppen, nachfolgend als erste und zweite Volumenelementgruppen bezeichnet, umfassen jeweils eine Mehrzahl an entsprechenden Volumenelementen. Die Volumenelemente der ersten Volumenelementgruppe sind nachfolgend als erste Volumenelemente bezeichnet, die Volumenelemente der zweiten Volumenelementgruppe sind nachfolgend als zweite Volumenelemente bezeichnet.

Die ersten Volumenelemente sind in der Art von Gitterpunkten eines geometrischen Gitters angeordnet und bilden ein erstes Teilgitter. Die Volumenelemente der ersten Volumenelementgruppe bilden zusammen ein erstes Teil des Brillenglases. Sie definieren zusammen einen Bereich des Brillenglases, durch den der Brillenträger bei bestimmungsgemäßen Gebrauch blickt, der die dioptrische Wirkung für das Sehen für einen ersten Objektabstand besitzt.

Die zweiten Volumenelemente sind ebenfalls in der Art von Gitterpunkten eines geometrischen Gitters angeordnet und bilden für sich genommen zusammen ein zweites Teilgitter. Die Volumenelemente der zweiten Volumenelementgruppe bilden zusammen ein zweites Teil des Brillenglases. Sie definieren zusammen einen Bereich des Brillenglases, durch den der Brillenträger bei bestimmungsgemäßen Gebrauch blickt, der die dioptrische Wirkung für das Sehen für einen zweiten Objektabstand besitzt, welcher von dem vorstehend angegebenen ersten Objektabstand abweicht, der durch das erste Teilgitter, das die Volumenelemente der ersten Volumenelementgruppe bilden, festgelegt wird.

Das erste Teilgitter und das zweite Teilgitter sind sich jeweils durchsetzend ineinander verschoben angeordnet. Dadurch fallen die Bereiche des Brillenglases, welche durch die beiden jeweils aus unterschiedlichen Volumenelementen gebildeten Teilgitter definiert sind und welche für unterschiedliche Objektabstände konzipiert sind makroskopisch geometrisch zusammen. Dies soll nachfolgend noch einmal anhand der Figuren verdeutlicht werden.

Die Figur 1 zeigt ein erstes Ausführungsbeispiel für die durchsetzend ineinander verschobene Anordnung zweier aus Volumenelementen erster und zweiter Volumenelementgruppen gebildeter Teilgitter. Das erste Teilgitter besteht aus den im vorliegenden Ausführungsbeispiel quaderförmigen Volumenelementen 1a, 1b, 1c ... 1t, 1u, die wie die weißen Felder eines Schachbretts angeordnet sind. Das zweite Teilgitter besteht aus den im vorliegenden Ausführungsbeispiel quaderförmigen Volumenelementen 2a, 2b, 2c ... 2t, 2u, die wie die schwarzen Felder eines Schachbretts angeordnet sind. Jedes quaderförmige Volumenelement 1a, 1b, 1c ... 1t, 1u, 2a, 2b, 2c ... 2t, 2u nimmt denselben Raum ein mit den Kantenlängen a₁, a₂, a₃. Die Kantenlängen a₁, a₂, a₃ liegen regelmäßig im Bereich zwischen 10 µm und 1 mm. Die Volumina der quaderförmigen Volumenelemente 1a, 1b, 1c ... 1t, 1u, 2a, 2b, 2c ... 2t, 2u sind dann im Bereich zwischen 1000 µm³ und 1 mm³.

Das erste Teilgitter basierend auf den quaderförmigen Volumenelementen 1a, 1b, 1c ... 1t, 1u und das zweite Teilgitter basierend auf den quaderförmigen Volumenelementen 2a, 2b, 2c ... 2t, 2u sind im vorliegenden Ausführungsbeispiel identisch ausgebildet. Geometrisch gesehen sind die beiden Teilgitter um die Kantenlänge a₁ in Richtung einer Blattzeile gegeneinander versetzt. Alternativ kann man auch sagen, dass die beiden Teilgitter um die Kantenlänge a₂ in senkrechter Richtung zur Richtung einer Blattzeile gegeneinander versetzt sind. Beide Teilgitter liegen in diesem Ausführungsbeispiel in einer Ebene. Vorliegend sei die in der Figur 1 sichtbare Oberfläche 3 die Fläche, die bei bestimmungsgemäßem Gebrauch des Brillenglases, welches auf der in der Figur 1 gezeigten Struktur basiert, dem Objekt zugewandt ist. Demzufolge ist dann die in der Figur 1 nicht sichtbare Oberfläche 4, diejenige die bei bestimmungsgemäßem Gebrauch des Brillenglases dem Auge des Brillenträgers zugewandt ist. Die objektseitige Oberfläche eines einzigen Volumenelements 1a, 1b, 1c ... 1t, 1u, 2a, 2b, 2c ... 2t, 2u, welches im vorliegenden Ausführungsbeispiel jeweils eine plane Fläche darstellt liegt unter Berücksichtigung der obigen Größenangaben zwischen 100 µm² und 1 mm².

Der durch das erste Teilgitter definierte Teil des Brillenglases wird im vorliegenden Ausführungsbeispiel durch die Gesamtheit der Volumina der quaderförmigen Volumenelemente 1a, 1b, 1c ... 1t, 1u bestimmt. Anders ausgedrückt wird der durch das erste Teilgitter definierte Bereich des Brillenglases, der für das sehen in eine erste Objektentfernung konzipiert ist und durch den der Brillenträger bei bestimmungsgemäßem Gebrauch zum scharfen Sehen eines in dieser Entfernung angeordneten Objekts blickt, im vorliegenden Ausführungsbeispiel durch die Gesamtheit der objektseitigen (und augenseitigen) Oberflächen der quaderförmigen Volumenelemente 1a, 1b, 1c ... 1t, 1u bestimmt. Dieser Flächenbereich soll nach der Erfindung zwischen 0,3 cm² und 7 cm², vorzugsweise zwischen 0,5 cm² und 6 cm², weiter vorzugsweise zwischen 0,8 cm² und 5 cm² und schließlich noch weiter vorzugsweise zwischen 1 cm² und 4 cm² betragen.

Der durch das zweite Teilgitter definierte Teil des Brillenglases wird im vorliegenden Ausführungsbeispiel durch die Gesamtheit der Volumina der quaderförmigen Volumenelemente 2a, 2b, 2c ... 2t, 2u bestimmt. Anders ausgedrückt wird der durch das zweite Teilgitter definierte Bereich des Brillenglases, der für das sehen in eine zweite Objektentfernung konzipiert ist und durch den der Brillenträger bei bestimmungsgemäßem Gebrauch zum scharfen Sehen eines in dieser Entfernung angeordneten Objekts blickt, im vorliegenden Ausführungsbeispiel durch die Gesamtheit der objektseitigen (und augenseitigen) Oberflächen der quaderförmigen Volumenelemente 2a, 2b, 2c ... 2t, 2u bestimmt. Dieser Flächenbereich soll nach der Erfindung zwischen 0,3 cm² und 7 cm², vorzugsweise zwischen 0,5 cm² und 6 cm², weiter vorzugsweise zwischen 0,8 cm² und 5 cm² und schließlich noch weiter vorzugsweise zwischen 1 cm² und 4 cm² betragen.

Makroskopisch gesehen fallen der durch das erste Teilgitter definierte Flächenbereich und der durch das zweite Teilgitter definierte Flächenbereich zusammen, so dass keine makroskopische Trennung zwischen dem für die erste Objektentfernung ausgelegten Teil des Brillenglases und dem für die zweite Objektentfernung ausgelegten Teil des Brillenglases besteht. Im Gegensatz zu einem für einen presbyopen Träger konzipierten Bifokal- oder Gleitsichtglas herkömmlicher Art fallen Nah- und Fernteil makroskopisch gesehen zusammen.

Wie derartige Gitterstrukturen hergestellt werden können, ist z.B. in der WO 2015/102938 A1 im Detail beschrieben. So erhält ein mit einem oder mehreren Prozessoren ausgestatteter 3D-Drucker ein CAD-Modell mit Daten, von im vorliegenden Ausführungsbeispiel einer einzigen Schicht welche eine Vielzahl an Volumenelementen umfasst. So enthalten die Daten z.B. die Information, dass die vorstehend angegebenen ersten Volumenelemente 1a, 1b, 1c ... 1t, 1u aus einem ersten Material mit einer ersten Dielektrizitätskonstante gefertigt werden sollen, was einer ersten Drucktinte entspricht und die Information, dass die vorstehend angegebenen zweiten Volumenelemente 2a, 2b, 2c ... 2t, 2u aus einem zweiten Material mit einer zweiten Dielektrizitätskonstante gefertigt werden sollen, was einer zweiten Drucktinte entspricht. Der oder die Prozessoren des 3D-Druckers berechnen aus den Daten den jeweiligen Ort, an dem die jeweilige Drucktinte platziert werden soll, die Temperatur und/oder den UV-Lichtbedarf, sowie die entsprechenden Zeiten um die platzierte Drucktinte zur Generierung des jeweiligen Volumenelements 1a, 1b, 1c ... 1t, 1u, 2a, 2b, 2c ... 2t, 2u auszuhärten.

Die Figur 2 zeigt ein weiteres Ausführungsbeispiel für die durchsetzend ineinander verschobene Anordnung von Volumenelementen von Teilgittem. In diesem Ausführungsbeispiel wird das Gesamtgitter aus vier Teilgittern gebildet. Die vier Teilgitter umfassen Volumenelemente erster, zweiter, dritter und vierter Volumenelementgruppen. Das erste Teilgitter basierend auf den hexagonförmigen Volumenelementen 11a, 11b, 11c, 11d, das zweite Teilgitter basierend auf den hexagonförmigen Volumenelementen 12a, 12b, 12c, 12d, das dritte Teilgitter basierend auf den hexagonförmigen Volumenelementen 13a, 13b und das vierte Teilgitter basierend auf den hexagonförmigen Volumenelementen 14a, 14b sind im vorliegenden Ausführungsbeispiel identisch ausgebildet. Die Volumina der hexagonförmigen Volumenelemente 11a, 11b, 11c, 11d, 12a, 12b, 12c, 12d, 13a, 13b, 14a, 14b sind im Bereich zwischen 1000 µm³ und 1 mm³.

Der durch das erste Teilgitter definierte Teil des Brillenglases wird im vorliegenden Ausführungsbeispiel durch die Gesamtheit der Volumina der Volumenelemente 11a, 11b, 11c, 11d bestimmt. Anders ausgedrückt wird der durch das erste Teilgitter definierte Bereich des Brillenglases, der für das sehen in eine erste Objektentfernung konzipiert ist und durch den der Brillenträger bei bestimmungsgemäßem Gebrauch zum scharfen Sehen eines in dieser Entfernung angeordneten Objekts blickt, im vorliegenden Ausführungsbeispiel durch die Gesamtheit der objektseitigen (und augenseitigen) Oberflächen der Volumenelemente 11a, 11b, 11c, 11d bestimmt. Dieser Flächenbereich soll nach der Erfindung zwischen 0,3 cm² und 7 cm², vorzugsweise zwischen 0,5 cm² und 6 cm², weiter vorzugsweise zwischen 0,8 cm² und 5 cm² und schließlich noch weiter vorzugsweise zwischen 1 cm² und 4 cm² betragen.

Der durch das zweite Teilgitter definierte Teil des Brillenglases wird im vorliegenden Ausführungsbeispiel durch die Gesamtheit der Volumina der Volumenelemente 12a, 12b, 12c, 12d bestimmt. Anders ausgedrückt wird der durch das zweite Teilgitter definierte Bereich des Brillenglases, der für das sehen in eine zweite Objektentfernung konzipiert ist und durch den der Brillenträger bei bestimmungsgemäßem Gebrauch zum scharfen Sehen eines in dieser Entfernung angeordneten Objekts blickt, im vorliegenden Ausführungsbeispiel durch die Gesamtheit der objektseitigen (und augenseitigen) Oberflächen der Volumenelemente 12a, 12b, 12c, 12d bestimmt. Dieser Flächenbereich soll nach der Erfindung zwischen 0,3 cm² und 7 cm², vorzugsweise zwischen 0,5 cm² und 6 cm², weiter vorzugsweise zwischen 0,8 cm² und 5 cm² und schließlich noch weiter vorzugsweise zwischen 1 cm² und 4 cm² betragen.

Der durch das dritte Teilgitter definierte Teil des Brillenglases wird im vorliegenden Ausführungsbeispiel durch die Gesamtheit der Volumina der Volumenelemente 13a, 13b bestimmt. Anders ausgedrückt wird der durch das dritte Teilgitter definierte Bereich des Brillenglases, der für das Sehen in eine dritte Objektentfernung konzipiert ist und durch den der Brillenträger bei bestimmungsgemäßem Gebrauch zum scharfen Sehen eines in dieser Entfernung angeordneten Objekts blickt, im vorliegenden Ausführungsbeispiel durch die Gesamtheit der objektseitigen (und augenseitigen) Oberflächen der Volumenelemente 13a, 13b bestimmt. Dieser Flächenbereich soll nach der Erfindung zwischen 0,3 cm² und 7 cm², vorzugsweise zwischen 0,5 cm² und 6 cm², weiter vorzugsweise zwischen 0,8 cm² und 5 cm² und schließlich noch weiter vorzugsweise zwischen 1 cm² und 4 cm² betragen.

Der durch das vierte Teilgitter definierte Teil des Brillenglases wird im vorliegenden Ausführungsbeispiel durch die Gesamtheit der Volumina der Volumenelemente 14a, 14b bestimmt. Anders ausgedrückt wird der durch das vierte Teilgitter definierte Bereich des Brillenglases, der für das Sehen in eine vierte Objektentfernung konzipiert ist und durch den der Brillenträger bei bestimmungsgemäßem Gebrauch zum scharfen Sehen eines in dieser Entfernung angeordneten Objekts blickt, im vorliegenden Ausführungsbeispiel durch die Gesamtheit der objektseitigen (und augenseitigen) Oberflächen der Volumenelemente 14a, 14b bestimmt. Dieser Flächenbereich soll nach der Erfindung zwischen 0,3 cm² und 7 cm², vorzugsweise zwischen 0,5 cm² und 6 cm², weiter vorzugsweise zwischen 0,8 cm² und 5 cm² und schließlich noch weiter vorzugsweise zwischen 1 cm² und 4 cm² betragen.

Makroskopisch gesehen fallen der durch das erste Teilgitter definierte Flächenbereich, der durch das zweite Teilgitter definierte Flächenbereich, der durch das dritte Teilgitter definierte Flächenbereich und der durch das vierte Teilgitter definierte Flächenbereich zusammen, so dass keine makroskopische Trennung zwischen dem für die erste Objektentfernung ausgelegten Teil des Brillenglases, dem für die zweite Objektentfernung ausgelegten Teil des Brillenglases, dem für die dritte Objektentfernung ausgelegten Teil des Brillenglases und dem für die vierte Objektentfernung ausgelegten Teil des Brillenglases besteht.

Die Figur 3 zeigt ein zweites Ausführungsbeispiel für die durchsetzend ineinander verschobene Anordnung zweier aus Volumenelementen erster und zweiter Volumenelementgruppen gebildeter Teilgitter. Das erste Teilgitter basierend auf den Volumenelementen 21a, 21b, 21c, 21d ... 21x, 21y, 21z umfasst ein zylinderförmiges Volumenelement 21a und eine Mehrzahl an ringsegmentförmigen Volumenelementen 21b, 21c, 21d, ... 21x, 21y, 21z. Das zweite Teilgitter umfasst ausschließlich eine Mehrzahl an ringsegmentförmigen Volumenelementen 22a, 22b, 22y, 22z. Wie die in den Figuren 2 und 3 gezeigten Ausführungsbeispiele sind sämtliche Volumenelemente 21b, 21c, 21d, ... 21x, 21y, 21z, 22a, 22b, 22y, 22z in einer Ebene angeordnet.

Die Figur 4 zeigt ein drittes Ausführungsbeispiel für die durchsetzend ineinander verschobene Anordnung zweier aus Volumenelementen erster und zweiter Volumenelementgruppen gebildeter Teilgitter.

Das erste Teilgitter basierend auf den quaderförmigen Volumenelementen 1a, 1b, 1c ... 1x, 1y, 1z und das zweite Teilgitter basierend auf den quaderförmigen Volumenelementen 2a, 2b, 2c ... 2y, 2z sind im vorliegenden Ausführungsbeispiel identisch ausgebildet. Beide Teilgitter stellen eine Sequenz dreidimensionaler kubischer Strukturen dar, deren jeweiligen Volumenelemente 21b, 21c, 21d, ... 21x, 21y, 21z, 22a, 22b, 22y, 22z benachbart zueinander durchsetzend ineinander angeordnet sind. Das finale Gitter umfasst demnach eine Mehrzahl an Schichten der in der Figur 1 gezeigten Art. Vorliegend sei die in der Figur 1 sichtbare Oberfläche 3 die Fläche, die bei bestimmungsgemäßem Gebrauch des Brillenglases, welches auf der in der Figur 1 gezeigten Struktur basiert, dem Objekt zugewandt ist. Demzufolge ist dann die in der Figur 1 nicht sichtbare Oberfläche 4, diejenige, die bei bestimmungsgemäßem Gebrauch des Brillenglases dem Auge des Brillenträgers zugewandt ist.

Der durch das erste Teilgitter definierte Teil des Brillenglases wird im vorliegenden Ausführungsbeispiel durch die Gesamtheit der Volumina der quaderförmigen Volumenelemente 1a, 1b, 1c ... 1x, 1y, 1z bestimmt. Anders ausgedrückt wird der durch das erste Teilgitter definierte Bereich des Brillenglases, der für das Sehen in eine erste Objektentfernung konzipiert ist und durch den der Brillenträger bei bestimmungsgemäßem Gebrauch zum scharfen Sehen eines in dieser Entfernung angeordneten Objekts blickt, im vorliegenden Ausführungsbeispiel durch die Gesamtheit der objektseitigen (und augenseitigen) Oberflächen der quaderförmigen Volumenelemente 1a, 1b, 1c (also alle geschwärzten Flächen der Oberfläche 3) bestimmt. Dieser Flächenbereich soll nach der Erfindung zwischen 0,3 cm² und 7 cm², vorzugsweise zwischen 0,5 cm² und 6 cm², weiter vorzugsweise zwischen 0,8 cm² und 5 cm² und schließlich noch weiter vorzugsweise zwischen 1 cm² und 4 cm² betragen.

Der durch das zweite Teilgitter definierte Teil des Brillenglases wird im vorliegenden Ausführungsbeispiel durch die Gesamtheit der Volumina der quaderförmigen Volumenelemente 2a, 2b, 2c ... 2x, 2y, 2z bestimmt. Anders ausgedrückt wird der durch das zweite Teilgitter definierte Bereich des Brillenglases, der für das Sehen in eine zweite Objektentfernung konzipiert ist und durch den der Brillenträger bei bestimmungsgemäßem Gebrauch zum scharfen Sehen eines in dieser Entfernung angeordneten Objekts blickt, im vorliegenden Ausführungsbeispiel durch die Gesamtheit der objektseitigen (und augenseitigen) Oberflächen der quaderförmigen Volumenelemente 2a, 2b, 2c (also alle weißen Flächen der Oberfläche 3) bestimmt. Dieser Flächenbereich soll nach der Erfindung zwischen 0,3 cm² und 7 cm², vorzugsweise zwischen 0,5 cm² und 6 cm², weiter vorzugsweise zwischen 0,8 cm² und 5 cm² und schließlich noch weiter vorzugsweise zwischen 1 cm² und 4 cm² betragen.

Makroskopisch gesehen fallen der durch das erste Teilgitter definierte Flächenbereich (also alle geschwärzten Flächen der Oberfläche 3) und der durch das zweite Teilgitter definierte Flächenbereich (also alle weißen Flächen der Oberfläche 3) zusammen, so dass keine makroskopische Trennung zwischen dem für die erste Objektentfernung ausgelegten Teil des Brillenglases und dem für die zweite Objektentfernung ausgelegten Teil des Brillenglases besteht. Im Gegensatz zu einem für einen presbyopen Träger konzipierten Bifokal- oder Gleitsichtglas herkömmlicher Art fallen Nah- und Fernteil makroskopisch gesehen zusammen.

Insbesondere in dem Fall, dass die objekt- und augenseitigen Oberflächen 3, 4 der ersten und zweiten Teile des Brillenglases ebene Flächen bilden, kann eine Auslegung auf unterschiedliche Objektabstände ausschließlich durch eine entsprechende Variation des Brechungsindex realisiert werden. Man benötigt demzufolge ineinander verschachtelte GRIN-Strukturen. Anstelle oder zusätzlich zu entsprechend angepassten Brechungsindexvariationen lassen sich verschachtelte Fokusbereiche auch mit Volumenelementen erzeugen, deren objekt- und/oder augenseitigen Oberflächen in der erforderlichen Weise gekrümmt ausgebildet sind.

Die in der Figur 4 gezeigte Struktur stellt ein sehr komplexes System dar, weil die Foki der unterschiedlichen Materialien, sich mit jeder Schicht wieder beeinflussen. Interessant ist diese Struktur, wenn Einstärkengläser betrachtet werden. Dann könnten diese 3D-Schachbrettmuster am Rand eingesetzt werden. Da 3D-Drucker nur binär, d.h. nur das eine oder das andere Material drucken können, müssen "gleitende Substanzwechsel" durch hinreichend kleine Volumenelemente realisiert werden.

Die Figur 5 zeigt ein viertes Ausführungsbeispiel für die durchsetzend ineinander verschobene Anordnung zweier aus Volumenelementen erster und zweiter Volumenelementgruppen gebildeter Teilgitter. Die Figur 5a) zeigt die grundsätzliche Anordnung der Volumenelemente 51a, 51b, ... 51t, 51u, 52a, 52b, 52c, ... 52t, 52u in der Art eines Schachbrettmusters wie oben zur Figur 1 im Detail beschrieben. Abweichend (oder ggf. auch zusätzlich) zur Ausführungsvariante nach der Figur 1, bei der die einzelnen Volumenelemente durch entsprechende Variation des Brechungsindex so gestaltet sind, dass verschmelzende Teile, die für unterschiedliche Objektentfernungen ein scharfes Sehen ermöglichen, entstehen, sind in der Ausführungsform nach der Figur 5 Volumenelemente 51a, 51b, ... 51t, 51u, 52a, 52b, 52c, ... 52t, 52u inkludiert, deren objektseitigen (und ggf. auch augenseitigen) Oberflächen unterschiedlich gekrümmt sind, so dass benachbarte erste und zweite Volumenelemente nicht stetig, sondern winklig und ggf. sprunghaft aneinander grenzen. Die Figur 5a) zeigt eine vergrößerte Darstellung jeweils eines der ersten und zweiten Volumenelemente 52c und 51i, welche objektseitige Oberflächen 53c und 54c aufweisen, die am Übergang, an dem zwei benachbarte erste und zweite Volumenelemente aneinander grenzen, eine unterschiedliche Krümmung aufweisen.

Die Figur 6 zeigt ein erstes Ausführungsbeispiel eines Brillenglases 60 in Draufsicht von der Objektseite in Form einer Prinzipskizze. Die sichtbare Oberfläche ist mit dem Bezugszeichen 63 gekennzeichnet. Das Ausführungsbeispiel weist einen Bereich 61 auf, der in der erfindungsgemäßen Form ausgebildet ist. Es ist eine verschachtelte Anordnung zweier Teilgitter in der Art eines "Schachbrettmusters" zu sehen, wie es in der Figur 1 gezeigt ist. Volumenelemente des ersten Teilgitters sind exemplarisch mit den Bezugszeichen 61a, 61b und Volumenelemente des zweiten Teilgitters sind exemplarisch mit den Bezugszeichen 62a, 62b gekennzeichnet.

Der Bereich 61 ist nach der Erfindung für scharfes Sehen in zwei unterschiedlichen Objektentfernungen ausgelegt.

Die Figur 7 zeigt ein zweites Ausführungsbeispiel eines Brillenglases 70 im Querschnitt (Prinzipskizze). Das gesamte Brillenglas 70 besteht in diesem Ausführungsbeispiel aus einer erste Volumenelementgruppe mit einer Mehrzahl an ersten Volumenelementen 71a, 71b, die in der Art von Gitterpunkten eines geometrischen Gitters ein erstes Teilgitter bildend angeordnet sind und aus einer zweiten Volumenelementgruppe mit einer Mehrzahl an zweiten Volumenelementen 72a, 72b, die in der Art von Gitterpunkten eines geometrischen Gitters ein zweites Teilgitter bildend angeordnet sind. Die Ausführung entspricht im Grundsatz der in der Figur 4 gezeigten Anordnung der beiden Teilgitter zueinander.

Die ersten Volumenelemente 71a, 71b bilden zusammen ein erstes Teil des Brillenglases, das die dioptrische Wirkung für das Sehen für einen ersten Objektabstand besitzt. Die zweiten Volumenelemente bilden zusammen ein zweites Teil des Brillenglases, das die dioptrische Wirkung für das Sehen für einen zweiten von dem ersten Objektabstand verschiedenen Objektabstand besitzt. Da die erste Volumenelementgruppe und die zweite Volumenelementgruppe sich durchsetzen, bilden sie einen makroskopisch gemeinsamen Durchsichtbereich, welcher zum einen ein scharfes Sehen eines in dem ersten Objektabstand d₁ angeordneten Objekts und ein scharfes Sehen eines in einem zweiten Objektabstand d₂ angeordneten Objekts ermöglicht. Die entsprechenden Fokusebenen sind in der Zeichnung mit den Bezugszeichen 73 und 74 gekennzeichnet.

Die Figur 8 zeigt ein drittes Ausführungsbeispiel eines Brillenglases 80 im Querschnitt (als Prinzipskizze). Bei diesem Ausführungsbeispiel ist die erfindungsgemäße Struktur 81 auf der Rückseite (Augenseite) 84 eines transparenten Trägers 85 in Form einer vergrabenen Struktur aufgebracht. Die Vorderseite (Objektseite) 83 des Brillenglases 80 kann sphärisch, torisch, rotationssymmetrisch asphärisch oder asphärisch (z.B. als Freiformfläche) ausgeführt sein.

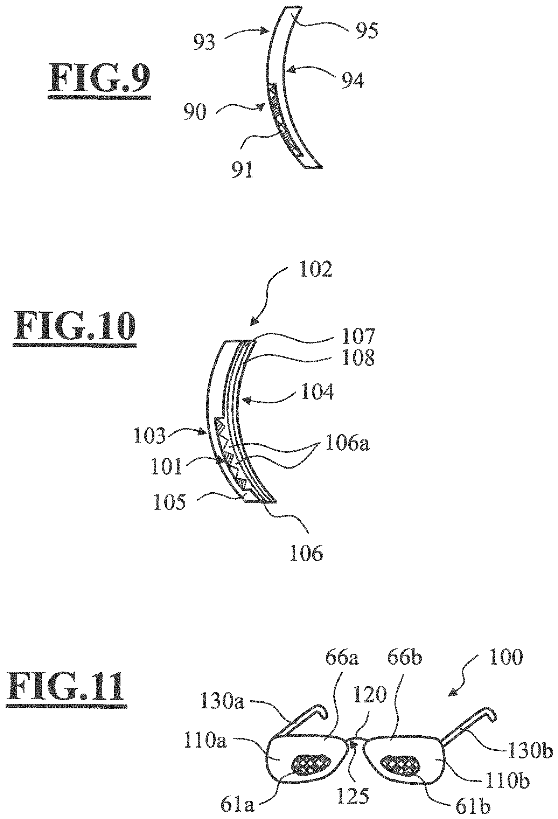

Der Figur 9 ist ein viertes Ausführungsbeispiel eines Brillenglases 90 im Querschnitt (in Form einer Prinzipskizze) zu entnehmen. Bei diesem Ausführungsbeispiel ist die erfindungsgemäße Struktur 91 auf der Vorderseite (Objektseite) 93 eines transparenten Trägers 95 in Form einer vergrabenen Struktur aufgebracht. Die Rückseite (Augenseite) 94 des Brillenglases 90 kann sphärisch, torisch oder asphärisch (z.B. als Freiformfläche) ausgeführt sein.

Auf einer oder beiden optisch wirksamen Flächen 83, 84, 93, 94 der Brillengläser 80, 90 können Beschichtungen, wie z.B. Hartschichten, Antireflexbeschichtungen, Antihaftbeschichtungen und dergleichen aufgebracht sein.

Die Figur 10 zeigt in Form einer Prinzipskizze ein fünftes Ausführungsbeispiel eines erfindungsgemäßen Brillenglases 102 im Querschnitt. Bei diesem Ausführungsbeispiel ist die erfindungsgemäße Struktur 101 auf einen Teil der Rückseite (Augenseite) 104 eines transparenten Trägers 105 in Form einer vergrabenen Struktur aufgebracht. Die Vorderseite (Augenseite) 103 des Brillenglases 102 kann sphärisch, torisch oder asphärisch (z.B. als Freiformfläche) ausgeführt sein. Auf der vergrabenen Struktur 101 ist eine glättende, auch die Zwischenräume 106a der vergrabenen Struktur verfüllende Hartschicht 106, eine Haftvermittlungsschicht 107 und eine aus einer Mehrzahl an Einzelschichten bestehende Antireflexbeschichtung 108 aufgebracht.

Es wird hiermit ausdrücklich daraufhingewiesen, dass auch Strukturen 101 sowohl vorne als auch hinten auf den Träger 105 aufgebracht sein können.

Ein Ausführungsbeispiel einer Brille 100 mit erfindungsgemäßen Brillengläsern 110a, 110b entnimmt man der Figur 11. Die Brille 100 umfasst neben den beiden Brillengläsern 110a, 110b eine Brillenfassung 120, von der die Brücke 125 und die beiden Bügel 130a, 130b gezeigt sind. Jedes Brillenglas 110a, 110b umfasst einen Träger 66a, 66b, welcher jeweils eine erfindungsgemäße Struktur 61a, 61b der in der Figur 6 gezeigten Art trägt. Sämtliche Bestandteile der Brille können mit Hilfe eines 3D-Druckverfahrens hergestellt sein.

Zusammenfassend besteht die Idee der Erfindung darin, mit einem Fertigungsverfahren, das die Kontrolle der dioptrischen Wirkung des Brillenglases, insbesondere die Kontrolle des Brechungsindices für jedes einzelne Volumenelement und die relative Orientierung der Oberflächen der Volumenelemente erlaubt (z.B. PolyJet-Printing) eine dreidimensionale Struktur aufzubauen, bei der die Fern- und Nahbereiche ineinander verschachtelt vorliegen. Die Wechsel von einem Fokus zum nächsten können graduell oder sprunghaft erfolgen. Im ersten Fall ergeben sich kleine Übergangszonen mit ähnlichen Eigenschaften wie der Progressionskanal beim herkömmlichen Gleitsichtglas und den damit verbundenen optischen Eigenschaften. Zweitens kann der Eigenschaftswechsel sprunghaft durch Änderung des Materials oder Änderung der Orientierung der optischen Fläche erfolgen.

Die Flächenelemente können auf beliebige Weise angeordnet werden. Beispielsweise, aber nicht abschließend als Schachbrett, Sechsecke oder konzentrische Kreise.

Die unstetigen Flächen können in einer bevorzugten Ausführungsform als vergrabene Strukturen in zwei Materialien ausgeführt werden, dadurch wird einerseits die spätere Hart- und AntireflexBeschichtung wesentlich erleichtert (es können herkömmliche glättende Hartschicht-Systeme eingesetzt werden), andererseits bilden die Unstetigkeiten der Flächen keine Kavitäten zur späteren Ansammlung von Verschmutzungen auf der Oberfläche.

Daraus ergeben sich verschiedene Kombinationen von optischen Flächen:
- zwei unstetige Flächen auf der Vorder- und Rückseite
- eine unstetige Fläche auf der Vorder- oder Rückseite zusammen mit einer sphärischen, torischen oder asphärischen (Freiform-) Fläche auf der anderen Seite des Glases

Welche Kombination die optimale Korrektur ergibt, folgt aus der Kombination der individuellen Parameter (sphärische, astigmatische, prismatische Wirkung, Addition etc.) mit den Möglichkeiten der unterschiedlichen Flächeneigenschaften.

Die Hartbeschichtung muss so eingestellt werden, dass die Kanten der optisch wirksamen Flächen nicht oder nicht mehr als absolut unvermeidlich geglättet werden. Wird die Änderung der Brechkraft über den Brechungsindex des Materials betrieben, so finden sich die möglichen Ausführungsformen in den Patentanmeldungen WO 2015/014381 A1 und WO 2014/179780 A1. Ist die gewünschte Wirkungsdifferenz (Addition) zwischen zwei oder mehreren Flächenelementen bei Anwendung nur eines der beiden Prinzipien (Materialvariation vs. unstetige Oberfläche) nicht ausreichend um die gewünschte Wirkung zu erzielen, so können die beiden Ansätze miteinander kombiniert werden.

Das Brillenglas sollte weiterhin über die übliche Veredelung, Hart- und AR-Beschichtung, verfügen. Als mögliche Ausführungsform bietet es sich an, die erfindungsgemäßen Ansätze auf Hybridgläser zu übertragen. Vorbedingung ist die Verfügbarkeit eines passend zur Oberfläche des Brillenglases vorgeformten Träger der erfindungsgemäßen Struktur.

## Patentansprüche

1. Verfahren zum Herstellen eines Brillenglases (60, 70, 80, 90, 102, 110a, 110b) mit den Schritten
- additives Fertigen einer ersten Volumenelementgruppe, wobei die erste Volumenelementgruppe eine Mehrzahl an ersten Volumenelementen (1a, 1b, ...; 11a, 11b, ...; 51a, 51b, ...; 61a, 61b; 71a, 71b) umfasst, wobei die Mehrzahl an ersten Volumenelementen (1a, 1b, ...; 11a, 11b, ...; 51a, 51b, ...; 61a, 61b; 71a, 71b) in der Art von Gitterpunkten eines geometrischen Gitters ein erstes Teilgitter bildend angeordnet sind, wobei die ersten Volumenelemente (1a, 1b, ...; 11a, 11b, ...; 51a, 51b, ...; 61a, 61b; 71a, 71b) zusammen ein erstes Teil des Brillenglases (60, 70, 80, 90, 110a, 110b) bilden, das die dioptrische Wirkung für das Sehen für einen ersten Objektabstand (d₁) besitzt
- additives Fertigen einer zweiten Volumenelementgruppe, wobei die zweite Volumenelementgruppe eine Mehrzahl an zweiten Volumenelementen (2a, 2b, ...; 12a, 12b, ...; 52a, 52b, ...; 62a, 62b; 72a, 72b) umfasst, wobei die Mehrzahl an zweiten Volumenelementen (2a, 2b, ...; 12a, 12b, ...; 52a, 52b, ...; 62a, 62b; 72a, 72b) in der Art von Gitterpunkten eines geometrischen Gitters ein zweites Teilgitter bildend angeordnet sind, wobei die zweiten Volumenelemente (2a, 2b, ...; 12a, 12b, ...; 52a, 52b, ...; 62a, 62b; 72a, 72b) zusammen ein zweites Teil des Brillenglases (60, 70, 80, 90, 110a, 110b) bilden, das die dioptrische Wirkung für das Sehen für einen zweiten von dem ersten Objektabstand (d₁) verschiedenen Objektabstand (d₂) besitzt,
**dadurch gekennzeichnet, dass**
- das erste Teilgitter und das zweite Teilgitter beim additiven Fertigen sich jeweils durchsetzend ineinander angeordnet werden.

2. Verfahren nach Anspruch 1, **gekennzeichnet durch** den Schritt
- additives Fertigen eines Trägers (66a, 66b) mit einer Fläche (104), auf der die erste Volumenelementgruppe und die zweite Volumenelementgruppe angeordnet werden.

3. Brillenglas (60, 70, 80, 90, 102, 110a, 110b) umfassend
- eine erste Volumenelementgruppe, wobei die erste Volumenelementgruppe eine Mehrzahl an ersten Volumenelementen (1a, 1b, ...; 11a, 11b, ...; 51a, 51b, ...; 61a, 61b; 71a, 71b) umfasst, wobei die Mehrzahl an ersten Volumenelementen (1a, 1b, ...; 11a, 11b, ...; 51a, 51b, ...; 61a, 61b; 71a, 71b) in der Art von Gitterpunkten eines geometrischen Gitters ein erstes Teilgitter bildend angeordnet sind, wobei die ersten Volumenelemente (1a, 1b, ...; 11a, 11b, ...; 51a, 51b, ...; 61a, 61b; 71a, 71b) zusammen ein erstes Teil des Brillenglases (60, 70, 80, 90, 102, 110a, 110b) bilden, das die dioptrische Wirkung für das Sehen für einen ersten Objektabstand (d₁) besitzt
- eine zweite Volumenelementgruppe, wobei die zweite Volumenelementgruppe eine Mehrzahl an zweiten Volumenelementen (2a, 2b, ...; 12a, 12b, ...; 52a, 52b, ...; 62a, 62b; 72a, 72b) umfasst, wobei die Mehrzahl an zweiten Volumenelementen (2a, 2b, ...; 12a, 12b, ...; 52a, 52b, ...; 62a, 62b; 72a, 72b) in der Art von Gitterpunkten eines geometrischen Gitters ein zweites Teilgitter bildend angeordnet sind, wobei die zweiten Volumenelemente (2a, 2b, ...; 12a, 12b, ...; 52a, 52b, ...; 62a, 62b; 72a, 72b) zusammen ein zweites Teil des Brillenglases (60, 70, 80, 90, 110a, 110b) bilden, das die dioptrische Wirkung für das Sehen für einen zweiten von dem ersten Objektabstand (d₁) verschiedenen Objektabstand (d₂) besitzt, wobei
- das erste Teilgitter und das zweite Teilgitter sich jeweils durchsetzend ineinander angeordnet sind,
**dadurch gekennzeichnet, dass**
- das erste Teilgitter dreidimensional ausgebildet ist und dass das zweite Teilgitter dreidimensional ausgebildet ist.

4. Brillenglas (60, 70, 80, 90, 102, 110a, 110b) nach Anspruch 3, **dadurch gekennzeichnet, dass** die ersten Volumenelemente (1a, 1b, ...; 11a, 11b, ...; 51a, 51b, ...; 61a, 61b; 71a, 71b) aus einem ersten Material bestehen und dass die zweiten Volumenelemente (2a, 2b, ...; 12a, 12b, ...; 52a, 52b, ...; 62a, 62b; 72a, 72b) aus einem zweiten von dem ersten Material sich unterscheidenden Material bestehen.

5. Brillenglas (60, 70, 80, 90, 102, 110a, 110b) nach Anspruch 4, **dadurch gekennzeichnet, dass** das erste Material einen ersten Brechungsindex aufweist und dass das zweite Material einen zweiten von dem ersten Brechungsindex unterschiedlichen Brechungsindex aufweist.

6. Brillenglas (60, 70, 80, 90, 102, 110a, 110b) nach einem der Ansprüche 3 bis 5 , **dadurch gekennzeichnet, dass** die ersten Volumenelemente (51a, 51b, 51i, 51t, 51u) jeweils ein erstes Oberflächenelement (54c) aufweisen und dass die zweiten Volumenelemente (52a, 52b, 52c, 52t, 52u) jeweils ein zweites Oberflächenelement (53c) aufweisen und dass jeweils eines der ersten Oberflächenelemente (54c) und jeweils eines der zweiten Oberflächenelemente (53c), die aneinander grenzen, winklig zueinander angeordnet sind.

7. Brillenglas (60, 70, 80, 90, 102, 110a, 110b) nach einem der Ansprüche 3 bis 6, **dadurch gekennzeichnet, dass** der erste Objektabstand (d₁) sich von dem zweiten Objektabstand (d₂) um mehr als einen Wert aus der Gruppe 10 cm, 15 cm, 20 cm, 30 cm oder 50 cm unterscheidet.

8. Brillenglas (60, 80, 90, 102, 110a, 110b) nach einem der Ansprüche 3 bis 7, **dadurch gekennzeichnet, dass** die erste Volumenelementgruppe und die zweite Volumenelementgruppe auf einer Fläche eines Trägers (85, 95, 105, 66a, 66b) angeordnet sind.

9. Brillenglas (60, 80, 90, 102, 110a, 110b) nach Anspruch 8, **dadurch gekennzeichnet, dass**
- der Träger (85) eine objektseitige sphärische oder torische oder freigeformte Oberfläche aufweist und dass die Fläche, auf der die erste Volumenelementgruppe und die zweite Volumenelementgruppe angeordnet sind, die augenseitige Fläche des Trägers (85) ist oder dass
- der Träger (95, 105) eine augenseitige sphärische oder torische oder freigeformte Oberfläche aufweist und dass die Fläche (104), auf der die erste Volumenelementgruppe und die zweite Volumenelementgruppe angeordnet sind, die objektseitige Fläche des Trägers (95, 105) ist oder dass
- die Fläche, auf der die erste Volumenelementgruppe und die zweite Volumenelementgruppe angeordnet sind, die augenseitige und/oder die objektseitige Fläche des Trägers ist.

10. Brillenglas (60, 80, 90, 102, 110a, 110b) nach einem der Ansprüche 8 oder 9, **dadurch gekennzeichnet, dass** der Träger (85, 95, 105, 66a, 66b) einen Brechungsindexgradienten aufweist.

11. Brillenglas (60, 70, 80, 90, 102, 110a, 110b) nach einem der Ansprüche 3 bis 10, **dadurch gekennzeichnet, dass** auf der ersten Volumenelementgruppe und der zweiten Volumenelementgruppe eine Beschichtung (106, 106a, 107, 108) angeordnet ist.

12. Brillenglas (60, 70, 80, 90, 102, 110a, 110b) nach einem der Ansprüche 3 bis 11, **dadurch gekennzeichnet, dass** die ersten Volumenelemente (1a, 1b, ...; 11a, 11b, ...; 51a, 51b, ...; 61a, 61b; 71a, 71b) jeweils ein Volumen zwischen 1000 µm³ und 1 mm³ aufweisen und/oder dass die zweiten Volumenelemente (2a, 2b, ...; 12a, 12b, ...; 52a, 52b, ...; 62a, 62b; 72a, 72b) jeweils ein Volumen zwischen 1000 µm³ und 1 mm³ aufweisen.

13. Brillenglas (60, 70, 80, 90, 102, 110a, 110b) nach Anspruch 12, **dadurch gekennzeichnet, dass**
- die ersten Volumenelemente (1a, 1b, ...; 11a, 11b, ...; 51a, 51b, ...; 61a, 61b; 71a, 71b) jeweils eine objektseitige Oberfläche zwischen 100 µm² und 1 mm² aufweisen und/oder dass die zweiten Volumenelemente (2a, 2b, ...; 12a, 12b, ...; 52a, 52b, ...; 62a, 62b; 72a, 72b) jeweils eine objektseitige Oberfläche zwischen 100 µm² und 1 mm² aufweisen und/oder dass
- die ersten Volumenelemente (1a, 1b, ...; 11a, 11b, ...; 51a, 51b, ...; 61a, 61b; 71a, 71b) jeweils eine augenseitige Oberfläche zwischen 100 µm² und 1 mm² aufweisen und/oder dass die zweiten Volumenelemente (2a, 2b, ...; 12a, 12b, ...; 52a, 52b, ...; 62a, 62b; 72a, 72b) jeweils eine augenseitige Oberfläche zwischen 100 µm² und 1 mm² aufweisen.

## Claims

1. Method for producing a spectacle lens (60, 70, 80, 90, 102, 110a, 110b), including the steps of:
- additive manufacturing of a first volume element group, wherein the first volume element group comprises a plurality of first volume elements (1a, 1b, ...; 11a, 11b, ...; 51a, 51b, ...; 61a, 61b; 71a, 71b), wherein the plurality of first volume elements (1a, 1b, ...; 11a, 11b, ...; 51a, 51b, ...; 61a, 61b; 71a, 71b) are arranged in the style of grid points of a geometric grid so as to form a first partial grid, wherein the first volume elements (1a, 1b, ...; 11a, 11b, ...; 51a, 51b, ...; 61a, 61b; 71a, 71b) together form a first part of the spectacle lens (60, 70, 80, 90, 110a, 110b), said first part of the spectacle lens having the dioptric power for vision at a first object distance (d₁),
- additive manufacturing of a second volume element group, wherein the second volume element group comprises a plurality of second volume elements (2a, 2b, ...; 12a, 12b, ...; 52a, 52b, ...; 62a, 62b; 72a, 72b), wherein the plurality of second volume elements (2a, 2b, ...; 12a, 12b, ...; 52a, 52b, ...; 62a, 62b; 72a, 72b) are arranged in the style of grid points of a geometric grid so as to form a second partial grid, wherein the second volume elements (2a, 2b, ...; 12a, 12b, ...; 52a, 52b, ...; 62a, 62b; 72a, 72b) together form a second part of the spectacle lens (60, 70, 80, 90, 110a, 110b), said second part of the spectacle lens having the dioptric power for vision at a second object distance (d₂) that differs from the first object distance (d₁),
**characterized in that**
- the first partial grid and the second partial grid are arranged within one another, penetrating one another in each case, during the additive manufacturing.

2. Method according to Claim 1, **characterized by** the step of:
- additive manufacturing of a carrier (66a, 66b) with a surface (104), on which the first volume element group and the second volume element group are arranged.

3. Spectacle lens (60, 70, 80, 90, 102, 110a, 110b), comprising
- a first volume element group, wherein the first volume element group comprises a plurality of first volume elements (1a, 1b, ...; 11a, 11b, ...; 51a, 51b, ...; 61a, 61b; 71a, 71b), wherein the plurality of first volume elements (1a, 1b, ...; 11a, 11b, ...; 51a, 51b, ...; 61a, 61b; 71a, 71b) are arranged in the style of grid points of a geometric grid so as to form a first partial grid, wherein the first volume elements (1a, 1b, ...; 11a, 11b, ...; 51a, 51b, ...; 61a, 61b; 71a, 71b) together form a first part of the spectacle lens (60, 70, 80, 90, 102, 110a, 110b), said first part of the spectacle lens having the dioptric power for vision at a first object distance (d₁),
- a second volume element group, wherein the second volume element group comprises a plurality of second volume elements (2a, 2b, ...; 12a, 12b, ...; 52a, 52b, ...; 62a, 62b; 72a, 72b), wherein the plurality of second volume elements (2a, 2b, ...; 12a, 12b, ...; 52a, 52b, ...; 62a, 62b; 72a, 72b) are arranged in the style of grid points of a geometric grid so as to form a second partial grid, wherein the second volume elements (2a, 2b, ...; 12a, 12b, ...; 52a, 52b, ...; 62a, 62b; 72a, 72b) together form a second part of the spectacle lens (60, 70, 80, 90, 110a, 110b), said second part of the spectacle lens having the dioptric power for vision at a second object distance (d₂) that differs from the first object distance (d₁), wherein
- the first partial grid and the second partial grid are arranged within one another, penetrating one another in each case,
**characterized in that**
- the first partial grid has a three-dimensional embodiment and **in that** the second partial grid has a three-dimensional embodiment.

4. Spectacle lens (60, 70, 80, 90, 102, 110a, 110b) according to Claim 3, **characterized in that** the first volume elements (1a, 1b, ...; 11a, 11b, ...; 51a, 51b, ...; 61a, 61b; 71a, 71b) consist of a first material and **in that** the second volume elements (2a, 2b, ...; 12a, 12b, ...; 52a, 52b, ...; 62a, 62b; 72a, 72b) consist of a second material that differs from the first material.

5. Spectacle lens (60, 70, 80, 90, 102, 110a, 110b) according to Claim 4, **characterized in that** the first material has a first refractive index and **in that** the second material has a second refractive index that differs from the first refractive index.

6. Spectacle lens (60, 70, 80, 90, 102, 110a, 110b) according to any one of Claims 3 to 5, **characterized in that** the first volume elements (51a, 51b, 51i, 51t, 51u) each have a first surface element (54c) and **in that** the second volume elements (52a, 52b, 52c, 52t, 52u) each have a second surface element (53c) and **in that** respectively one of the first surface elements (54c) and respectively one of the second surface elements (53c), which adjoin one another, are arranged at an angle to one another.

7. Spectacle lens (60, 70, 80, 90, 102, 110a, 110b) according to any one of Claims 3 to 6, **characterized in that** the first object distance (d₁) differs from the second object distance (d₂) by more than a value from the group of 10 cm, 15 cm, 20 cm, 30 cm and 50 cm.

8. Spectacle lens (60, 80, 90, 102, 110a, 110b) according to any one of Claims 3 to 7, **characterized in that** the first volume element group and the second volume element group are arranged on a surface of a carrier (85, 95, 105, 66a, 66b).

9. Spectacle lens (60, 80, 90, 102, 110a, 110b) according to Claim 8, **characterized in that**
- the carrier (85) has an object-side spherical or toric or free-form surface and **in that** the surface on which the first volume element group and the second volume element group are arranged is the eye-side surface of the carrier (85), or **in that**
- the carrier (95, 105) has an eye-side spherical or toric or free-form surface and **in that** the surface (104) on which the first volume element group and the second volume element group are arranged is the object-side surface of the carrier (95, 105), or **in that**
- the surface on which the first volume element group and the second volume element group are arranged is the eye-side and/or the object-side surface of the carrier.

10. Spectacle lens (60, 80, 90, 102, 110a, 110b) according to either of Claims 8 and 9, **characterized in that** the carrier (85, 95, 105, 66a, 66b) has a refractive index gradient.

11. Spectacle lens (60, 70, 80, 90, 102, 110a, 110b) according to any one of Claims 3 to 10, **characterized in that** a coat (106, 106a, 107, 108) is arranged on the first volume element group and the second volume element group.

12. Spectacle lens (60, 70, 80, 90, 102, 110a, 110b) according to any one of Claims 3 to 11, **characterized in that** the first volume elements (1a, 1b, ...; 11a, 11b, ...; 51a, 51b, ...; 61a, 61b; 71a, 71b) each have a volume of between 1000 µm³ and 1 mm³ and/or **in that** the second volume elements (2a, 2b, ...; 12a, 12b, ...; 52a, 52b, ...; 62a, 62b; 72a, 72b) each have a volume of between 1000 µm³ and 1 mm³.

13. Spectacle lens (60, 70, 80, 90, 102, 110a, 110b) according to Claim 12, **characterized in that**
- the first volume elements (1a, 1b, ...; 11a, 11b, ...; 51a, 51b, ...; 61a, 61b; 71a, 71b) each have an object-side surface of between 100 µm² and 1 mm² and/or **in that** the second volume elements (2a, 2b, ...; 12a, 12b, ...; 52a, 52b, ...; 62a, 62b; 72a, 72b) each have an object-side surface of between 100 µm² and 1 mm², and/or **in that**
- the first volume elements (1a, 1b, ...; 11a, 11b, ...; 51a, 51b, ...; 61a, 61b; 71a, 71b) each have an eye-side surface of between 100 µm² and 1 mm² and/or **in that** the second volume elements (2a, 2b, ...; 12a, 12b, ...; 52a, 52b, ...; 62a, 62b; 72a, 72b) each have an eye-side surface of between 100 µm² and 1 mm².

## Revendications

1. Procédé de fabrication d'un verre de lunette (60, 70, 80, 90, 102, 110a, 110b) avec les étapes de :
- fabrication additive d'un premier groupe d'éléments volumiques, sachant que le premier groupe d'éléments volumiques comprend une pluralité de premiers éléments volumiques (1a, 1b, ... ; 11a, 11b, ... ; 51a, 51b, ... ; 61a, 61b ; 71a, 71b), sachant que la pluralité de premiers éléments volumiques (1a, 1b, ... ; 11a, 11b, ... ; 51a, 51b, ... ; 61a, 61b; 71a, 71b) est disposée à la manière de points de réseau d'un réseau géométrique formant une première partie de réseau, sachant que les premiers éléments volumiques (1a, 1b, ... ; 11a, 11b, ... ; 51a, 51b, ... ; 61a, 61b ; 71a, 71b) forment ensemble une première partie du verre de lunette (60, 70, 80, 90, 110a, 110b), qui possède l'effet dioptrique pour la vision pour une première distance d'objet (d₁),
- fabrication additive d'un deuxième groupe d'éléments volumiques, sachant que le deuxième groupe d'éléments volumiques comprend une pluralité de premiers éléments volumiques (2a, 2b, ... ; 12a, 12b, ... ; 52a, 52b, ... ; 62a, 62b ; 72a, 72b), sachant que la pluralité de deuxièmes éléments volumiques (2a, 2b, ... ; 12a, 12b, ... ; 52a, 52b, ... ; 62a, 62b ...; 72a, 72b) est disposée à la manière de points de réseau d'un réseau géométrique formant une deuxième partie de réseau, sachant que les deuxièmes éléments volumiques (2a, 2b, ... ; 12a, 12b, ... ; 52a, 52b, ... ; 62a, 62b ; 72a, 72b) forment ensemble une deuxième partie du verre de lunette (60, 70, 80, 90, 110a, 110b), qui possède l'effet dioptrique pour la vision pour une deuxième distance d'objet (d₂) différente de la première distance d'objet (d₁),
**caractérisé en ce que**
- la première partie de réseau et la deuxième partie de réseau sont respectivement disposées s'enchevêtrant l'une dans l'autre lors de la fabrication additive.

2. Procédé selon la revendication 1, **caractérisé par** l'étape de
- fabrication additive d'un support (66a, 66b) avec une surface (104) sur laquelle le premier groupe d'éléments volumiques et le deuxième groupe d'éléments volumiques sont disposés.

3. Verre de lunette (60, 70, 80, 90, 102, 110a, 110b) comprenant
- un premier groupe d'éléments volumiques, sachant que le premier groupe d'éléments volumiques comprend une pluralité de premiers éléments volumiques (1a, 1b ..., ; 11a, 11b ... ; 51a, 51b, ... ; 61a, 61; 71a, 71b), sachant que la pluralité d'éléments volumiques (1a, 1b, ... ; 11a, 11b, ... ; 51a, 51b, ... ; 61a, 61b ; 71a, 71b) est disposée à la manière de points de réseau d'un réseau géométrique formant une première partie de réseau, sachant que les premiers éléments volumiques (1a, 1b, ...; 11a, 11b, ... ; 51a, 51b, ... ; 61a, 61b ; 71a, 71b) forment ensemble une première partie du verre de lunette (60, 70, 80, 90, 102, 110a, 110b), qui possède l'effet dioptrique pour la vision pour une première distance d'objet (d₁),
- un deuxième groupe d'éléments volumiques, sachant que le deuxième groupe d'éléments volumiques comprend une pluralité de deuxièmes éléments volumiques (2a, 2b, ... ; 12a, 12b, ... ; 52a, 52b, ... ; 62a, 62b ; 72a, 72b), sachant que la pluralité de deuxièmes éléments volumiques (2a, 2b, ... ; 12a, 12b, ... ; 52a, 52b, ... ; 62a, 62b; 72a, 72b) est disposée à la manière de points de réseau d'un réseau géométrique formant une deuxième partie de réseau, sachant que les deuxièmes éléments volumiques (2a, 2b, ... ; 12a, 12b, ... ; 52a, 52b, ... ; 62a, 62b ; 72a, 72b) forment ensemble une deuxième partie du verre de lunette (60, 70, 80, 90, 110a, 110b), qui possède l'effet dioptrique pour la vision pour une deuxième distance d'objet (d₂) différente de la première distance d'objet (d₁), sachant que
- la première partie de réseau et la deuxième partie de réseau sont respectivement disposées s'enchevêtrant l'une dans l'autre, **caractérisé en ce que**
- la première partie de réseau est réalisée tridimensionnellement et **en ce que** la deuxième partie de réseau est réalisée tridimensionnellement.

4. Verre de lunette (60, 70, 80, 90, 102, 110a, 110b) selon la revendication 3, **caractérisé en ce que** les premiers éléments volumiques (1a, 1b, ... ; 11a, 11b, ... ; 51a, 51b, ...; 61a, 61b ; 71a, 71b) sont composés d'un premier matériau et **en ce que** les deuxièmes éléments volumiques (2a, 2b, ... ; 12a, 12b, ... ; 52a, 52b, ... ; 62a, 62b ; 72a, 72b) sont composés d'un deuxième matériau se différenciant du premier matériau.

5. Verre de lunette (60, 70, 80, 90, 102, 110a, 110b) selon la revendication 4, **caractérisé en ce que** le premier matériau comporte un premier indice de réfraction et **en ce que** le deuxième matériau comporte un deuxième indice de réfraction différent du premier indice de réfraction.

6. Verre de lunette (60, 70, 80, 90, 102, 110a, 110b) selon l'une quelconque des revendications 3 à 5, **caractérisé en ce que** les premiers éléments volumiques (51a, 51b, 51i, 51t, 51u) comportent respectivement un premier élément de surface (54c) et **en ce que** les deuxièmes éléments volumiques (52a, 52b, 52c, 52t, 52u) comportent respectivement un deuxième élément de surface (53c) et **en ce que** respectivement un des premiers éléments de surface (54c) et respectivement un des deuxièmes éléments de surface (53c), qui sont contigus, sont disposés de façon angulaire l'un par rapport à l'autre.

7. Verre de lunette (60, 70, 80, 90, 102, 110a, 110b) selon l'une quelconque des revendications 3 à 6, **caractérisé en ce que** la première distance d'objet (d₁) se différencie de la deuxième distance d'objet (d₂) de plus d'une valeur du groupe 10 cm, 15 cm, 20 cm, 30 cm ou 50 cm.

8. Verre de lunette (60, 80, 90, 102, 110a, 110b) selon l'une quelconque des revendications 3 à 7, **caractérisé en ce que** le premier groupe d'éléments volumiques et le deuxième groupe d'éléments volumiques sont disposés sur une surface d'un support (85, 95, 105, 66a, 66b).

9. Verre de lunette (60, 80, 90, 102, 110a, 110b) selon la revendication 8, **caractérisé en ce que**
- le support (85) comporte une surface sphérique ou torique ou de forme libre du côté objet et **en ce que** la surface sur laquelle le premier groupe d'éléments volumiques et le deuxième groupe d'éléments volumiques sont disposés, est la surface côté oeil du support (85) ou **en ce que**
- le support (95, 105) comporte une surface sphérique ou torique ou de forme libre du côté oeil et **en ce que** la surface (104) sur laquelle le premier groupe d'éléments volumiques et le deuxième groupe d'éléments volumiques sont disposés, est la surface côté objet du support (95, 105) ou **en ce que**
- la surface sur laquelle le premier groupe d'éléments volumiques et le deuxième groupe d'éléments volumiques sont disposés, est la surface du support côté oeil et/ou côté objet.

10. Verre de lunette (60, 80, 90, 102, 110a, 110b) selon l'une quelconque des revendications 8 ou 9, **caractérisé en ce que** le support (85, 95, 105, 66a, 66b) comporte un gradient d'indice de réfraction.

11. Verre de lunette (60, 70, 80, 90, 102, 110a, 110b) selon l'une quelconque des revendications 3 à 10, **caractérisé en ce qu'**un revêtement (106, 106a, 107, 108) est disposé sur le premier groupe d'éléments volumiques et le deuxième groupe d'éléments volumiques.

12. Verre de lunette (60, 70, 80, 90, 102, 110a, 110b) selon l'une quelconque des revendications 3 à 11, **caractérisé en ce que** les premiers éléments volumiques (1a, 1b, ... ; 11a, 11b, ... ; 51a, 51b, ... ; 61a, 61b ; 71a, 71b) comportent respectivement un volume entre 1000 µm³ et 1 mm³ et/ou **en ce que** les deuxièmes éléments volumiques (2a, 2b, ... ; 12a, 12b, ... ; 52a, 52b, ... ; 62a, 62b ; 72a, 72b) comportent respectivement un volume entre 1000 µm³ et 1 mm³.

13. Verre de lunette (60, 70, 80, 90, 102, 110a, 110b) selon la revendication 12, **caractérisé en ce que**
- les premiers éléments volumiques (1a, 1b, ... ; 11a, 11b, ...; 51a, 51b, ... ; 61a, 61b ; 71a, 71b) comportent respectivement une surface côté objet entre 100 µm² et 1 mm² et/ou **en ce que** les deuxièmes éléments volumiques (2a, 2b, ... ; 12a, 12b, ... ; 52a, 52b, ... ; 62a, 62b ; 72a, 72b) comportent respectivement une surface côté objet entre 100 µm² et 1 mm² et/ou **en ce que**
- les premiers éléments volumiques (1a, 1b, ... ; 11a, 11b, ... ; 51a, 51b, ... ; 61a, 61b ; 71a, 71b) comportent respectivement une surface côté oeil entre 100 µm² et 1 mm² et/ou **en ce que** les deuxièmes éléments volumiques (2a, 2b, ... ; 12a, 12b, ... ; 52a, 52b , ... ; 62a, 62b ; 72a, 72b) comportent respectivement une surface côté oeil entre 100 µm² et 1 mm².
